# EUROPÄISCHE PATENTSCHRIFT

(11) **EP 3 062 924 B1**
(45) Veröffentlichungstag und Bekanntmachung des Hinweises auf die Patenterteilung: **19.04.2017**
(21) Anmeldenummer: 14802807.9
(22) Anmeldetag: 29.10.2014
(51) Int. Cl.: B01J 19/30

(54) **FÜLLKÖRPER, INSBESONDERE FÜR STOFF- UND/ODER WÄRMEAUSTAUSCHKOLONNEN ODER -TÜRME**
PACKING ELEMENT, IN PARTICULAR FOR MASS-TRANSFER- AND/OR HEAT-EXCHANGE COLUMNS OR TOWERS
GARNISSAGE, EN PARTICULIER POUR COLONNES OU TOURS D'ÉCHANGE DE MATIÈRE ET/OU DE CHALEUR

(30) Priorität: 30.10.2013 DE 102013018190; 30.10.2013 DE 202013009576 U
(43) Veröffentlichungstag der Anmeldung: 07.09.2016
(73) Patentinhaber: Raschig GmbH, 67061 Ludwigshafen (DE)
(72) Erfinder: SCHULTES, Prof. Dr. Michael, 67061 Ludwigshafen (DE)
(74) Vertreter: Leitner, Waldemar
(86) Internationale Anmeldenummer: PCT/EP2014/002904
(87) Internationale Veröffentlichungsnummer: WO 2015/062722

(56) Entgegenhaltungen:
- EP-A1- 1 541 229
- EP-A2- 0 761 303
- EP-B1- 0 764 462

## Beschreibung

Die Erfindung betrifft einen Füllkörper, insbesondere für Stoff- und/oder Warmeaustauschkolonnen oder-türme, die von einer Gas- und/oder Flüssigkeitsströmung versetzt werden, wobei der von einer ersten und einer zweiten Außenseite begrenzte Füllkörper eine Mehrzahl von Austauschflächen aufweist und diese im wesentlichen durch die Oberflächen von Halbwellen aufweisenden wellenförmigen Streifen ausgebildet sind, wobei der Füllkörper mindestens eine erste Streifen-Gruppe, die mindestens einen wellförmigen Streifen mit
einer ersten Periodenlänge I₁ enthält, und mindestens eine sich daran anschließende zweite Streifen-Gruppe, die mindestens einen wellenförmigen Streifen mit einer zweiten Periodenlänge I₂ enthält, aufweist, wobei sich diese wellenförmigen Streifen entlang einer gedachten Axialebene des Füllkörpers erstrecken und mindestens ein Streifen zwischen einem ersten Endsteg und einem zweiten Endsteg verläuft und die beiden Endstege in der Querrichtung des Füllkörpers verlaufen, wobei die Periodenlänge I₁ eines an die zweiten Streifen-Gruppe angrenzenden Streifens der ersten Streifen-Gruppe und die Periodenlänge I₂ eines an diesen angrenzenden Streifens der zweiten Streifen-Gruppe derart aufeinander abgestimmt sind, dass die beiden aneinander angrenzenden Streifen an mindestens einer Stelle derart in Wirkkontakt stehen, dass ein Flüssigkeitsübergang zwischen diesen beiden Streifen erfolgbar ist.

Ein derartiger Füllkörper ist aus der EP 0 764 462 B1 der Anmelderin bekannt. Dieser zeichnet sich dadurch aus, dass eine in einem hohen Maße gleichmäßige Verteilung der Flüssigkeit über die einzelnen Streifen, also über die Austauschflächen des Füllkörpers, gegeben ist: Die halbwellen- und/oder wellenförmige Struktur der im wesentlichen den Füllkörper ausbildenden Streifen bewirkt, dass die Flüssigkeit sich leicht über die Streifen verteilen können. Die Abstimmung der Periodenlänge der einzelnen Streifen bewirkt, dass sich die benachbarten Streifen an mindestens einer Stelle kreuzen, so dass hierdurch ein Übertritt von Flüssigkeit von einem zum benachbarten Streifen möglich ist. Die halbwellen- oder wellenförmige Ausbildung der einzelnen Streifen besitzt des weiteren den Vorteil, dass hierdurch eine besonders offene Struktur des Füllkörpers ausgebildet wird, die in einem geringeren Druckabfall in der Kolonne resultiert.

Aus der EP 1 541 229 A1 ist ein Füllkörper für den Stoff- und/oder Wärmeaustausch bekannt, insbesondere für Stoff- und/oder Wärmeaustauschkolonnen, die von einer Gas- und/oder Flüssigkeitsströmung durchsetzt werden, wobei der Füllkörper aus einer Platte erzeugt ist und mindestens einen Einschnitt in der Platte zur Bildung zweier länglicher Streifen zwischen den Querschnitten der Platte vorgesehen ist. Die Streifen sind zwischen diesen Querabschnitten aus der durch die Querabschnittsebene gehenden Ebene gebogen. Zwischen den gebogenen Streifen, senkrecht zu der durch die Querabschnitte gebildeten Ebene gesehen, ist mindestens eine Öffnung gebildet. Hierbei ist vorgesehen, dass sich die einzelnen Streifen des bekannten Füllkörpers nicht berühren.

Die WO 2013/143629 A1 beschreibt einen Füllkörper zur Verwendung in Stoff- und/oder Wärmeaustauschprozessen, durch den wenigstens eine Flüssigkeit fließen kann. Der Füllkörper weist eine äußere Oberfläche, die drei oder mehr nach außen gebogene Streifenelemente besitzt, und zwei diese verbindenden Randelemente auf. Der Füllkörper ist hierbei im Wesentlichen kugelförmig oder elipsoid ausgebildet.

Die GB 1573745 beschreibt einen im Wesentlichen zylindrischen Füllkörper. Aus dem Grundkörper dieses zylindrischen Füllkörpers sind Finger ausgeschnitten, die nach innen in Richtung der Zylinderachse gebogen sind. Die Finger erstrekken sich in einem Winkel zwischen 4 und 45 Grad zu der Achse des Zylinders. Gemäß einem in dieser Druckschrift offenbarten Ausführungsbeispiel sind drei Finger-Reihen mit jeweils acht Fingern in einer Reihe vorgesehen, wobei die mittlere dieser drei Finger-Reihen parallel zu der Zylinderachse verläuft und die obere und die untere Reihe verdreht angeordnet sind, so dass deren Finger einen Winkel von ungefähr 10 Grad in Bezug auf die Zylinderachse besitzen.

Es ist Aufgabe der vorliegenden Erfindung, den in der vorstehend genannten EP 0 764 462 B1 beschriebenen Füllkörper derart weiterzubilden, dass ein noch geringerer Druckabfall in einer die erfindungsgemäßen Füllkörper verwendenden Kolonne oder in einem Turm gegeben ist.

Die Aufgabe wird erfindungsgemäß dadurch gelöst, dass mindestens ein Streifen des Füllkörpers um eine In Längsrichtung des Füllkörpers verlaufende Torsionslinie tordiert ist, wobei die Torsion dieses Streifens um diese Torsionslinie vom ersten Endsteg ausgehend zunimmt, im Bereich eines ersten Amplitudenmaximums des Streifens maximal ist, im Bereich zwischen diesem Amplitudenmaximum und dem mittleren Bereich des Füllkörpers wieder abnimmt, von diesem mittleren Bereich ausgehend bis zu einem zweiten Amplitudenmaximum dieses Streifens zunimmt und im Bereich zwischen diesen Amplitudenmaximum und dem zweiten Endsteg wieder abnimmt, und dass sämtliche Streifen in diesem mittleren Bereich derart miteinander in Kontakt stehen, dass eine für die Flüssigkeit durchgehende Verbindung von der ersten Außenseite zu der zweiten Außenseite des Füllkörpers erfolgbar ist.

Durch die efindungsgemäßen Maßnahmen wird in vorteilhafter Art und Weise ein Füllkörper geschaffen, welcher eine gegenüber dem eingangs beschriebenen, aus der EP 0 764 462 B1 bekannten Füllkörper "offenere" Struktur aufweist, die in einer höheren Gasdurchlässigkeit und somit einem geringeren Widerstand für den Gasstrom, welcher eine die erfindungsgemäßen Füllkörper verwendete Kolonne oder Turm durchsetzt, resultiert.

Die erfindungsgemäße vorgesehene Torsion einer entsprechenden Anzahl von Streifen des erfindungsgemäßen Füllkörpers bewirkt, dass dieser den ihm beaufschlagenden Gasstrom auch in einer orthogonal zur vorgenannten Axialebene verlaufenden Richtung einen geringeren Strömungswiderstand entgegensetzt, da durch die erfindungsgemäß vorgesehene Torsion der Streifen um ihre Längsrichtung Öffnungen zwischen benachbarten Streifen des Füllkörpers ausgebildet werden, durch die der Gasstrom hindurch treten kann. Durch die tordierte Anordnung und Ausbildung der Streifen des erfindungsgemäßen Füllkörpers wird nämlich erreicht, dass die Ränder der einzelnen Streifen nicht - wie es beim bekannten Füllkörper der Fall ist - parallel und somit dicht nebeneinander liegen, sondern dass durch die Torsion der einzelnen Streifen die vorgenannten Öffnungen ausgebildet werden, durch die der Gasstrom hindurchströmen kann und somit der Widerstand, dem der erfindungsgemäße Füllkörper diesem Gasstrom entgegensetzt, verringert ist.

Ein weiterer Vorteil der erfindungsgemäß vorgesehenen Torsion einer oder mehrerer, vorzugsweise aller Streifen des erfindungsgemäßen Füllkörpers besteht darin, dass hierdurch eine erhöhte Verwindungssteifigkeit des Füllkörpers erzielt wird, die in einer höheren Stabilität resultiert.

Eine vorteilhafte Weiterbildung der Erfindung sieht vor, dass der letzte Streifen einer Streifen-Gruppe und der daran anschließende erste Streifen der darauf folgenden Streifen-Gruppe alternierend tordiert ausgebildet sind. Eine derartige Maßnahme besitzt den Vorteil, dass zwischen diesen beiden Streifen und somit zwischen benachbarten Streifen-Gruppen ein großer Freiraum vorhanden ist, der in einem geringen Gasströmungswiderstand resultiert.

Eine weitere vorteilhafte Weiterbildung der Erfindung sieht vor, dass der benachbarte Streifen einer Streifen-Gruppe alternierend tordiert ausgebildet sind.

Eine weitere vorteilhafte Weiterbildung der Erfindung sieht vor, dass der Füllkörper mindestens einen Streifen aufweist, dessen erste Halbwelle entgegengesetzt orientiert zur zweiten Halbwelle dieses Streifens ist, wobei bevorzugt wird, dass sämtliche Streifen mindestens einer Streifen-Gruppe des Füllkörpers wie vorstehend beschrieben ausgebildet sind. Eine derartige Maßnahme besitzt den Vorteil, dass hierdurch wiederum ein besonders großer Freiraum zwischen den benachbarten Streifen ausgebildet wird.

Eine weitere vorteilhafte Weiterbildung der Erfindung sieht vor, dass die Amplitude des oder der Streifen mindestens einer der Streifen-Gruppen kleiner als die Amplitude des oder der Streifen der an diese Streifen-Gruppe anschließenden weiteren Streifen-Gruppe ist. Eine derartige Maßnahme besitzt den Vorteil, dass hierdurch eine "eiförmige" oder "ballförmige" Außenkontur des Füllkörpers geschaffen wird, die in einer verbesserten Schüttfähigkeit des erfindungsgemäßen Füllkörpers resultiert.

Eine weitere vorteilhafte Weiterbildung der Erfindung sieht vor, dass mindestens ein Streifen des erfindungsgemäßen Füllkörpers ein Versteifungselement, insbesondere eine Sicke, die vorzugsweise in seiner Längsrichtung verläuft, aufweist und/oder dass mindestens einer der Endstege und/oder der Mittelbereich des Füllkörpers ein derartiges Versteifungselement, wiederum insbesondere eine Sicke, aufweist. Hierdurch wird in vorteilhafter Art und Weise die Verwindungssteifigkeit des erfindungsgemäßen Füllkörpers erhöht.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1:: eine perspektivische Darstellung eines ersten Ausführungsbeispiels,
- Figur 2:: eine Ansicht des ersten Ausführungsbeispiels aus der Richtung II der Figur 1,
- Figur 3:: eine Ansicht des ersten Ausführungsbeispiels aus der Richtung III der Figur 2,
- Figur 4:: eine Ansicht des ersten Ausführungsbeispiels aus der Richtung IV der Figur 2,
- Figur 5:: eine Ansicht eines zweiten Ausführungsbeispiels aus einer der Richtung III der Figur 2 entsprechenden Richtung,
- Figur 6:: eine Ansicht des zweiten Ausführungsbeispiels aus einer der Richtung IV der Figur 2 entsprechenden Richtung,
- Figur 7:: eine Ansicht eines dritten Ausführungsbeispiels aus einer der Richtung III der Figur 2 entsprechenden Richtung,
- Figur 8:: eine Ansicht des dritten Ausführungsbeispiels aus einer der Richtung IV der Figur 2 entsprechenden Richtung,
- Figur 9:: eine Ansicht eines vierten Ausführungsbeispiels aus einer der Richtung III der Figur 2 entsprechenden Richtung,
- Figur 10:: eine Ansicht des vierten Ausführungsbeispiels aus einer der Richtung IV der Figur 2 entsprechenden Richtung,
- Figur 11:: eine Ansicht eines fünften Ausführungsbeispiels aus einer der Richtung III der Figur 2 entsprechenden Richtung,
- Figur 12:: eine Ansicht des fünften Ausführungsbeispiels aus einer der Richtung IV der Figur 2 entsprechenden Richtung,
- Figur 13:: eine Ansicht eines sechsten Ausführungsbeispiels aus einer der Richtung III der Figur 2 entsprechenden Richtung,
- Figur 14:: eine Ansicht des sechsten Ausführungsbeispiels aus einer der Richtung IV der Figur 2 entsprechenden Richtung,
- Figur 15:: eine Ansicht eines siebten Ausführungsbeispiels aus einer der Richtung III der Figur 2 entsprechenden Richtung,
- Figur 16:: eine Ansicht des siebten Ausführungsbeispiels aus einer der Richtung IV der Figur 2 entsprechenden Richtung,
- Figur 17:: eine Ansicht eines achten Ausführungsbeispiels aus einer der Richtung III der Figur 2 entsprechenden Richtung,
- Figur 18:: eine Ansicht des achten Ausführungsbeispiels aus einer der Richtung IV der Figur 2 entsprechenden Richtung,
- Figur 19:: eine Ansicht eines neunten Ausführungsbeispiels aus einer der Richtung III der Figur 2 entsprechenden Richtung,
- Figur 20:: eine Ansicht des neunten Ausführungsbeispiels aus einer der Richtung IV der Figur 2 entsprechenden Richtung,
- Figur 21:: eine Ansicht eines zehnten Ausführungsbeispiels aus einer der Richtung III der Figur 2 entsprechenden Richtung,
- Figur 22:: eine Ansicht des zehnten Ausführungsbeispiels aus einer der Richtung IV der Figur 2 entsprechenden Richtung,
- Figur 23:: eine Ansicht eines elften Ausführungsbeispiels aus einer der Richtung III der Figur 2 entsprechenden Richtung,
- Figur 24:: eine Ansicht des elften Ausführungsbeispiels aus einer der Richtung IV der Figur 2 entsprechenden Richtung,
- Figur 25:: eine Ansicht eines zwölften Ausführungsbeispiels aus einer der Richtung III der Figur 2 entsprechenden Richtung, und
- Figur 26:: eine Ansicht des zwölften Ausführungsbeispiels aus einer der Richtung IV der Figur 2 entsprechenden Richtung.

Die nachstehend beschriebenen, in der englischen Sprache mit "random packing elements" bezeichneten Füllkörper werden - im Gegensatz zu "structured packing elements" - in eine Kolonne, insbesondere eine Stoff- und/oder Wärmeaustauschkolonne - in einer nicht orientierten Art und Weise eingebracht, in dem die Füllkörper z. B. in die Kolonne geschüttet werden. Sie werden daher auch "schüttfähige Füllkörper" genannt.

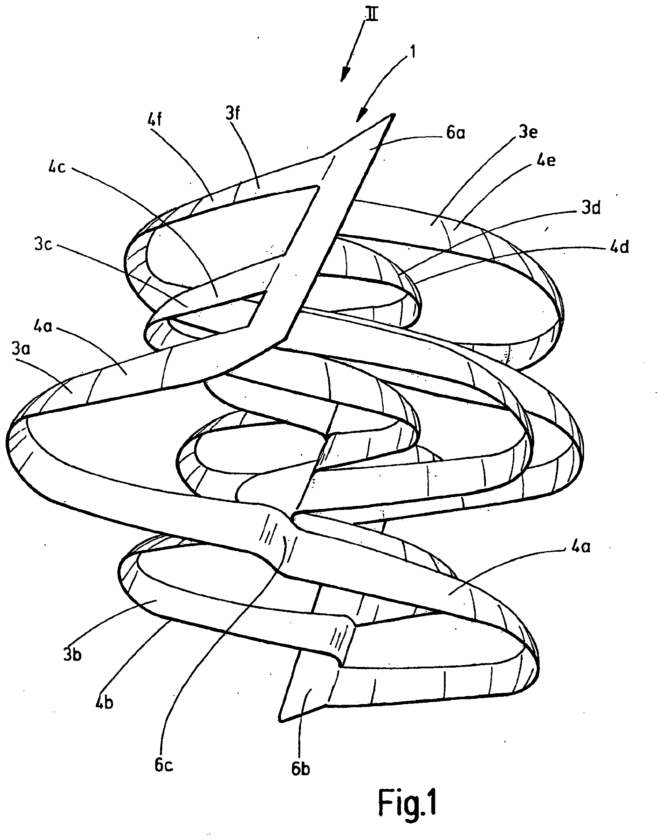

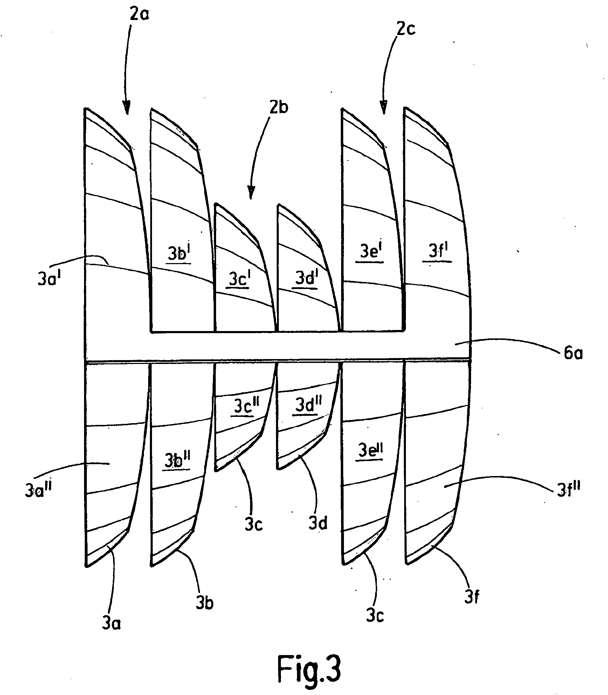

Das in den Figuren 1 bis 4 dargestellte erste Ausführungsbeispiel eines derartigen, allgemein mit 1 bezeichneten Füllkörpers weist drei Gruppen 2a, 2b und 2c (siehe Figur 3) von wellenförmigen Streifen 3a und 3b, 3c und 3d sowie 3e und 3f auf, deren Oberflächen Austauschflächen 4a-4f des Füllkörpers 1 ausbilden. Die Streifen 3a, 3b bzw. 3c, 3d bzw. 3e, 3f der ersten bzw. der zweiten bzw. der dritten Streifen-Gruppe 2a bzw. 2b bzw. 2c weisen eine Periodenlänge I₁ bzw. I₂ bzw. I₃ auf. Dem Fachmann ist aus nachfolgender Beschreibung ersichtlich, dass diese dreigruppige Ausführung des Füllkörpers 1 nicht zwingend ist. Vielmehr ist es möglich - in Abhängigkeit von dem gewünschten Einsatzzweck - mehr oder weniger als drei derartige Streifen-Gruppen 2a-2c mit jeweils mindestens einem Streifen 3a-3f vorzusehen. Im Minimalfall besteht der Füllkörper aus nur zwei Streifengruppen, die jeweils nur einen einzigen Streifen aufweisen. In dem hier gezeigten ersten Ausführungsbeispiel ist die Periodenlänge I₁ der beiden Streifen 3a, 3b der ersten Streifen-Gruppe 2a gleich der Periodenlänge I₃ der dritten Streifen-Gruppe 2c, während die beiden wellenförmigen Streifen 3c, 3d der zweiten Streifen-Gruppe 2b eine Periodenlänge I₂ aufweisen, die in dem hier beschriebenen Fall die Hälfte der Periodenlänge I₁ bzw. I₃ der Streifen 3a, 3b bzw. 3e, 3f der ersten bzw. der dritten Streifen-Gruppe 2a bzw. 2c beträgt. In Verallgemeinerung dieses Konstruktionsprinzips ist anzuführen, dass die zweite Periodenlänge I₂ der an die erste Streifen-Gruppe 2a anschließenden Streifen 3c, 3d der zweiten Streifen-Gruppe 2b mit der Periodenlänge I₁ bevorzugt wie I₂ = I₁/n mit n= 1, 2, etc. in Beziehung steht, d. h., dass die Periodenlänge I₁ ein Vielfaches, insbesondere ein geradzahliges Vielfaches, der Periodenlänge I₂ beträgt oder mit dieser Periodenlänge I₂ im wesentlichen gleich ist.

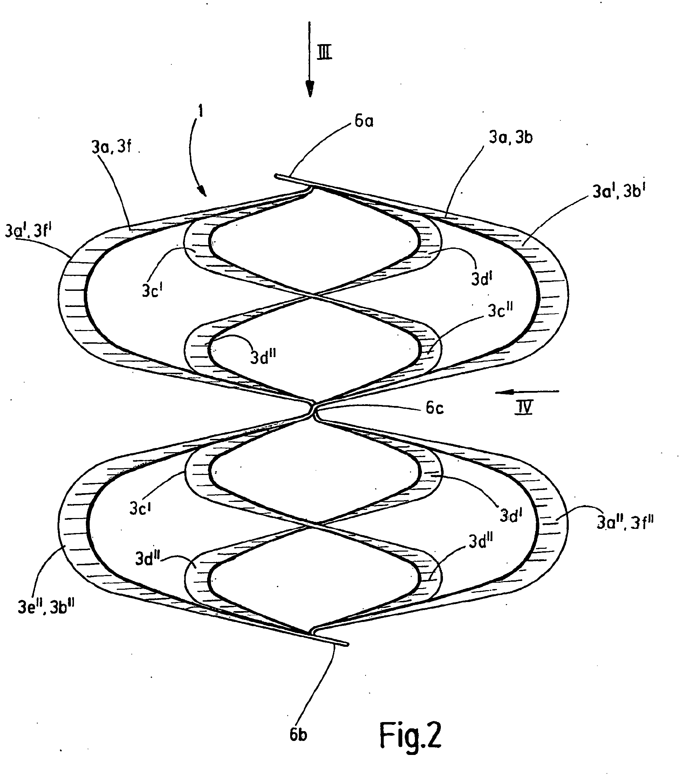

Hierdurch wird erreicht, dass sämtliche Streifen 3a-3f des Füllkörpers 1 - ausgehend von dessen Endstegen 6a, 6b in dessen Mittelbereich 6c ein Amplitudenminimum aufweisen, so dass sich - wie am besten aus Figur 2 ersichtlich ist - sämtliche Streifen 3a-3f in diesem Mittelbereich 6c derart miteinander in Wirkkontakt stehen, dass eine für die Flüssigkeit durchgehende Verbindung von der linken Außenseite bis zur rechten Außenseite des Füllkörpers ausgebildet wird, die es erlaubt, dass sich die auf den durch die Oberflächen der Streifen 3a-3f ausgebildeten Austauschflächen des Füllkörper 1 befindliche Flüssigkeit über den gesamten Füllkörper verteilen kann:

Im Hinblick auf die Gasdurchlässigkeit des Füllkörpers 1 ist es von Vorteil, dass benachbarte Streifen 3a und 3b, 3c und 3d, 3e und 3f gegenphasig angeordnet sind. Dies ist am besten aus den Figuren 1 bis 3 ersichtlich, welche z.B. zeigt, dass beim ersten Ausführungsbeispiel des Füllkörpers 1 die obere Halbwelle 3a' des ersten wellenförmigen Streifens 3a alternierend zur oberen Halbwelle 3b' des zweiten wellenförmigen Streifens 3b angeordnet ist. In entsprechender Art und Weise ist die untere Halbwelle 3a" des ersten wellenförmigen Streifens 3a in ihrer räumlichen Orientierung alternierend zur unteren Halbwelle 3b" des zweiten Streifens 3b der beiden zur ersten Streifen-Gruppe 2a gehörenden Streifen 3a, 3b angeordnet. Es ist natürlich auch denkbar, dass diese gegenphasige Anordnung nur für die gegenüberliegenden Halbwellen 3a', 3b' bzw. 3a", 3b" zweier benachbarter Streifen 3a, 3b einer Streifen-Gruppe 2a bzw. 2b vorgesehen ist. Dem Fachmann ist ersichtlich, dass in Abstimmung auf den jeweils ins Auge gefassten Einsatzzweck des Füllkörpers 1 eine Vielzahl von Anordnungsmöglichkeiten der Halbwellen 3a'-3f" der Streifen 3a-3f der Streifen-Gruppen 2a-2c möglich ist. Die obigen Ausführungen gelten natürlich auch für die weiteren Streifen-Gruppen 2b-2c des Füllkörpers 1. Vorzugsweise setzt sich die alternierende Anordnung auch über Gruppen-Grenzen hinweg, d. h., dass - wie aus der Figur 2 ersichtlich - bevorzugt wird, dass die Halbwellen 3b', 3b" des letzten Streifens 3b der ersten Streifen-Gruppe 2a und die Halbwellen 3c', 3c" des ersten Streifens 3c der zweiten Streifen-Gruppe 2b alternierend angeordnet sind. In entsprechender Art und Weise wird bevorzugt, dass auch der letzte Streifen 3d der zweiten Streifen-Gruppe 2b und die Halbwellen des ersten Streifens der dritten Streifen-Gruppe 2c alternierend angeordnet sind. Eine weitere mögliche Ausgestaltung des Füllkörpers 1 ist, dass die Streifen 3a-3f einer jeden Streifen-Gruppe 2a-2c innerhalb der jeweiligen Streifen-Gruppe 2a-2c gleichphasig angeordnet sind, aber dass dann die Streifen der einzelnen Streifen-Gruppen jeweils gegenphasig angeordnet sind, das heißt, dass z.B. die Streifen 3a, 3b der ersten Streifen-Gruppe 2a gleichphasig angeordnet sind, aber die Streifen 3c, 3d der zweiten Streifen-Gruppe 2b gegenphasig zu den Streifen 3a, 3b der ersten Streifen-Gruppe 2a angeordnet sind.

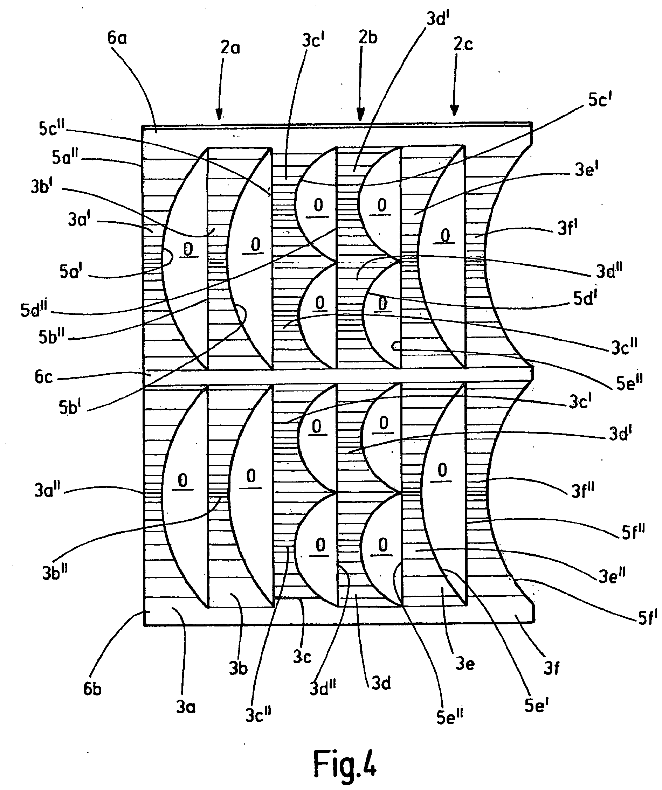

Um nun die Gasdurchlässigkeit des beschriebenen Füllkörpers 1 gegenüber dem eingangs beschriebenen, bekannten Füllkörper noch weiter zu verbessern ist bei diesem vorgesehen, dass die Streifen 3a-3f der drei Streifen-Gruppen 2a-2c des Füllkörpers 1 nicht - wie bei dem bekannten Füllkörper - plan verlaufen, sondern jeweils eine Torsion aufweisen. Man erkennt insbesondere aus den Figuren 2 und 4, dass die erste Halbwelle 3a' des ersten wellenförmigen Streifens 3a - in Laufrichtung des Streifens vom oberen Endsteg 6a zum unteren Endsteg 6b gesehen - im Bereich zwischen dem ersten Endsteg 6a und dem Mittelbereich 6c des Füllkörpers 1 eine positive, d. h. im Uhrzeigersinn verlaufende, Torsion aufweist, welche vom ersten Endbereich 6a ausgehend zunimmt, im Bereich ihres Amplitudenmaximums maximal ist und im Bereich zwischen diesem Amplitudenmaximum und dem mittleren Bereich 6c des Füllkörpers 1 wieder abnimmt. Die Torsion des Streifens 3a erfolgt dabei um einen - wiederum in Laufrichtung des Streifens 3a von oben nach unten gesehen - linken Rand 5a" des Streifens 3a, so dass also dieser Rand 5a" die Torsionslinie für die auf diesen Streifen 3a aufgebrachte Torsion ausbildet. Daraus resultiert, dass ein rechter Rand 5a' des Streifens 3a nicht mehr parallel zu einem linken Rand 5a" des Streifens 3a, sondern bogenförmig verläuft. Da die erste Halbwelle 3b' des an den ersten Streifen 3a angrenzenden zweiten Streifens 3b genauso verläuft wie die erste Halbwelle 3a', besitzt der linke Rand 5b" des zweiten Streifens 3b - genauso wie der linke Rand 5a" des ersten Streifens 3a' - einen geraden Verlauf, während der rechte Rand 5b' des zweiten Streifens 3b wiederum einen bogenförmigen Verlauf besitzt. Der rechte Rand 5a' des ersten Streifens 3a verläuft somit bogenförmig zum linken Rand 5b" des zweiten Streifens 3b, so dass in diesem Bereich eine Öffnung O ausgebildet, welche eine offenere Struktur des Füllkörpers 1 in diesem Bereich bewirkt, die in einer höheren Gasdurchlässigkeit und somit einem geringeren Widerstand für den Gasstrom, welcher eine die Füllkörper 1 verwendenden Kolonne oder einen Turm durchsetzt, resultiert.

Die zweiten Halbwellen 3a" und 3b" des ersten Streifens 3a und des zweiten Streifens 3b verlaufen - wie wiederum aus Figur 4 ersichtlich ist - wie die ersten Halbwellen 3a' und 3b' zwischen dem Mittelbereich 6c und dem unteren Steg 6b wiederum positiv tordiert. Die zu den ersten Halbwellen 3a' und 3b' gemachten Ausführungen gelten daher entsprechend. Der rechte Rand 5a' der zweiten Halbwelle 3a" des ersten Streifens 3a ist somit wiederum vom gerade verlaufenden linken Rand 5b" des zweiten Streifens 3b bogenförmig weggekrümmt, so dass auch in diesem Bereich eine Öffnung O des Füllkörpers 1 ausgebildet wird, die die offene Struktur des Füllkörpers 1 in diesem Bereich erhöht und somit den Strömungswiderstand auch in diesem Bereich reduziert.

Wie insbesondere aus Figur 4 ersichtlich ist, sind die Streifen 3e und 3f der dritten Streifen-Gruppe 2c wie die Streifen 3a, 3b der ersten Streifen-Gruppe 2a ausgebildet, so dass eine erneute Erläuterung derselben nicht mehr erforderlich ist.

Die beiden Streifen 3c und 3d der zweiten Streifen-Gruppe 2b, welche im hier gezeigten Fall - wie bereits erwähnt - eine Periodenlänge I₂ = I₁ / 2 aufweisen, besitzen somit in ihrem Verlauf zwischen dem oberen Endsteg 6a und dem unteren Endsteg 6b des Füllkörpers 1 jeweils zwei Wellen mit jeweils einer ersten Halbwelle 3c' und einer zweiten Halbwelle 3c". Die erste Halbwelle der ersten, in den Figuren oberen Welle verläuft somit in ihrem Bereich zwischen dem oberen Endsteg 6a und ihrem Amplitudenminimum - wiederum in Laufrichtung von oben nach unten gesehen - positiv tordiert, also genauso wie die erste Halbwelle 3a' des ersten Streifens 3a, aber nur mit der kleineren Länge von I₂/ 2. Die zweite Halbwelle 3c" der in den Figuren oberen Welle der beiden Wellen des dritten Streifens 3c verläuft daran anschließend bis zum Mittelbereich 6c des Füllkörpers 1 und wiederum positiv tordiert, also genauso wie die zweite Halbwelle 3a" des ersten Streifens 3a, nur wiederum mit der Maßgabe, dass diese Verdrehung des dritten Streifens 3c über den kürzeren Bereich I₂/2erfolgt.

Die in den Figuren untere Welle des dritten Streifens 3c der zweiten Streifen-Gruppe 2b ist genauso wie die in Figuren obere und vorstehend beschriebene Welle des dritten Streifens 3c des Füllkörpers 1 ausgebildet, so dass die Ausgestaltung dieses Bereichs des Streifens 3c des Füllkörpers 1 nicht mehr näher beschrieben werden muss. Das gilt auch für die Ausbildung des vierten Streifens 3d der zweiten Streifen-Gruppe 2b, da dieser-wie aus den Figuren ersichtlich - genauso wie der dritte Streifen 3c ausgebildet ist.

Die jeweils rechten Ränder 5c' und 5d' der Streifen 3c und 3d der zweiten Streifen-Gruppe 2b verlaufen im Bereich der ersten Halbwellen 3c' und 3d' bogenförmig gekrümmt zu den jeweils linken Rändern 5d" und 5e" der an den Streifen 3c bzw. 3d anschließenden Streifen 3d bzw. 3e, so dass im Bereich zwischen dem ersten Endsteg 6a und dem Mittelbereich 6c jeweils zwei Öffnungen O ausgebildet werden, die die vorstehend genannten Eigenschaften und Wirkungen haben. Entsprechendes gilt für die jeweils rechten Ränder 5c' und 5d' der zweiten Halbwellen 3c" und 3d" der Streifen 3c und 3d im Bereich zwischen dem Mittelbereich 6c und dem zweiten Endsteg 6b. Der Verlauf einer jeden Halbwelle 3c', 3d' sowie 3c" und 3d" der zweiten Streifen-Gruppe 2b entspricht also jeweils dem Verlauf der Streifen 3a, 3b bzw. 3e, 3f der ersten bzw. dritten Streifen-Gruppe 2a bzw. 2c mit der Maßgabe, dass die Streifen 3c, 3d der zweiten Streifen-Gruppe 2b nur die Periodenlänge I₂ besitzen.

Das vorstehende erste Ausführungsbeispiel zeigt einen Füllkörper 1 mit drei Streifen-Gruppen 2a-2c mit jeweils zwei Streifen 3a und 3b, 3c und 3d, 3e und 3f, die jeweils gleichsinnig orientiert tordiert ausgeführt sind. Jeder der Streifen 3a-3f ist somit in der gleichen Richtung tordiert, d. h., dass innerhalb jeder der Streifen-Gruppen 2a-2c die Streifen 3a-3f die gleiche Torsions-Richtung aufweisen. Dies ist aber nicht zwingend erforderlich.

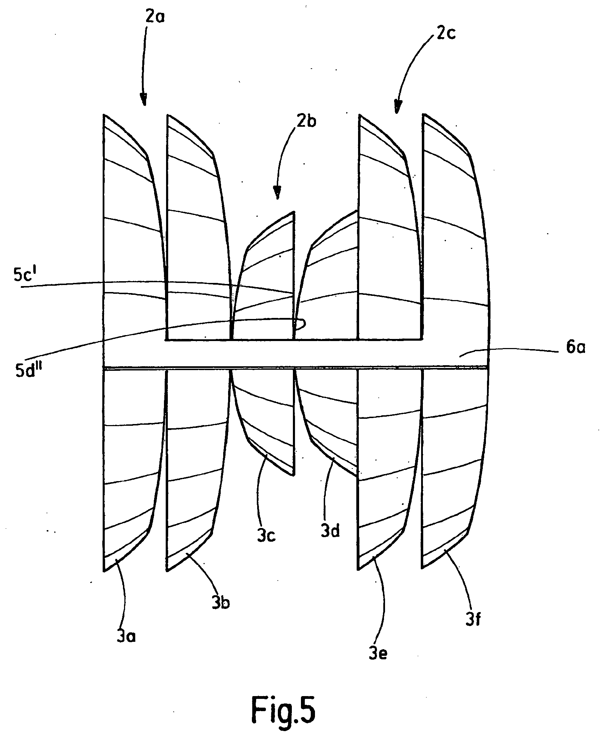

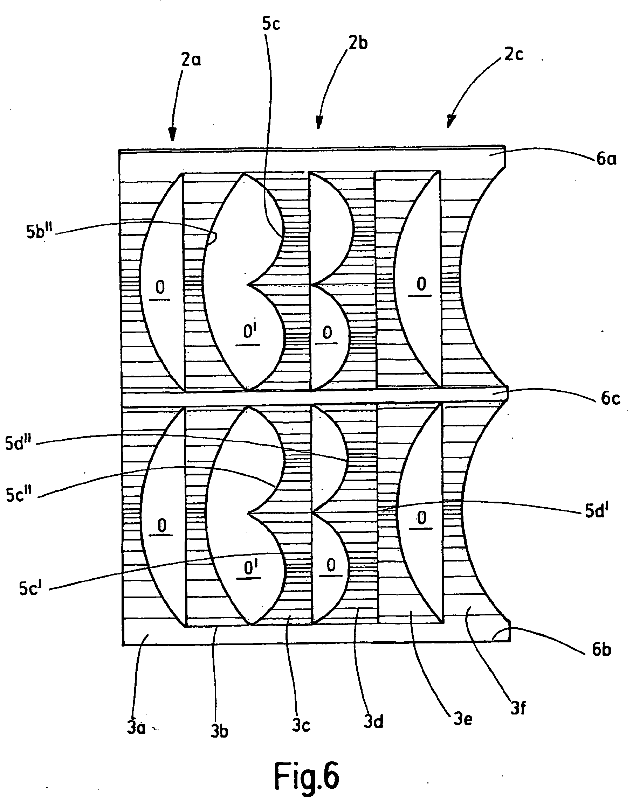

In den Figuren 5 und 6 ist nun ein zweites Ausführungsbeispiels eines Füllkörpers 1 dargestellt, bei dem der Füllkörper 1 wiederum drei Streifen-Gruppen 2a-2c mit jeweils zwei Streifen 3a, 3b bzw. 3c, 3d bzw. 3e-3f besitzt. Wie ein Vergleich der Figuren 5 und 6 mit den Figuren 3 und 4 zeigt, sind die Streifen 3a, 3b und 3e, 3f der ersten und der dritten Streifen-Gruppe 2a und 2c beim ersten und beim zweiten Ausführungsbeispiel gleich ausgebildet, so dass die Ausgestaltung, Funktion und Wirkung dieser Streifen 3a, 3b und 3e, 3f nicht mehr erneut erläutert werden muss. Der Unterschied zwischen den beiden Ausführungsbeispielen ist nun, dass die Streifen 3c und 3d der zweiten Streifen-Gruppe 2b - wie insbesondere die Figur 5 zeigt - nicht - wie die korrespondierende Streifen 2c, 2d der zweiten Streifen-Gruppe 2b des ersten Ausführungsbeispiels - in ihrer Laufrichtung gesehen im Uhrzeigersinn, also positiv, tordiert sind, sondern negativ, also im Gegenuhrzeigersinn. Die Streifen 3c, 3d der zweiten Streifen-Gruppe 2b sind somit hinsichtlich ihrer Torsion zu den Streifen 3a, 3b der ersten Streifen-Gruppe 2a und den Streifen 3e, 3f der dritten Streifengruppe 2c alternierend orientiert. Dies bewirkt, dass - wie am besten die Figur 6 zeigt - der Füllkörper 1 insbesondere in seinem Übergangsbereich zwischen der ersten Streifen-Gruppe 2a und der zweiten Streifen-Gruppe 2b in vorteilhafter Art und Weise eine besonders offene Struktur besitzt: Wie aus der vorgenannten Figur leicht ersichtlich ist, verläuft der an den ersten Streifen 3c der zweiten Streifen-Gruppe 2b angrenzende zweite Streifen 3b der ersten Streifen-Gruppe 2a derart, dass sein rechter Rand 5b' vom linken Rand 5c" des dritten Streifens 3c weggekrümmt ist, während zusätzlich hierzu noch der linke Rand 5c" des dritten Streifens 3c sich in entgegengesetzter Richtung vom rechten Rand 5b' des zweiten Streifens 3b wegkrümmt, so dass -wie durch die großen Öffnungen O' der Figur 6 angedeutet - zwischen diesen beiden Streifen 3b, 3c ein großer Freiraum vorhanden ist, der in einem geringen Gasströmungswiderstand resultiert.

Wie aus den Figuren 5 und 6 weiter ersichtlich ist, ist trotz der tordierten Ausgestaltung der Streifen 3c, 3d ein Flüssigkeitsübergang zwischen den beiden Streifen 3c, 3d möglich, da sich der linke Rand 5d" des Streifens 3d und der rechte Rand 5c' des Streifens 3c in einem oder mehreren Bereichen berühren oder zumindest so nahe kommen, dass ein kapillarer Flüssigkeitsübergang zwischen den Streifen 3c und 3d möglich ist.

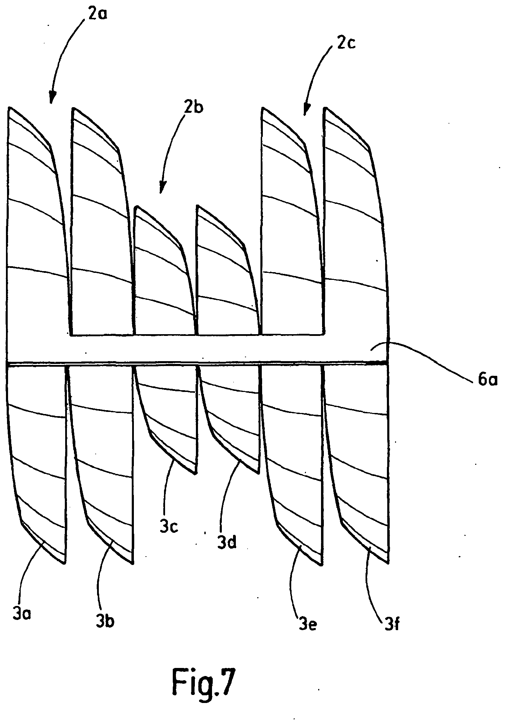

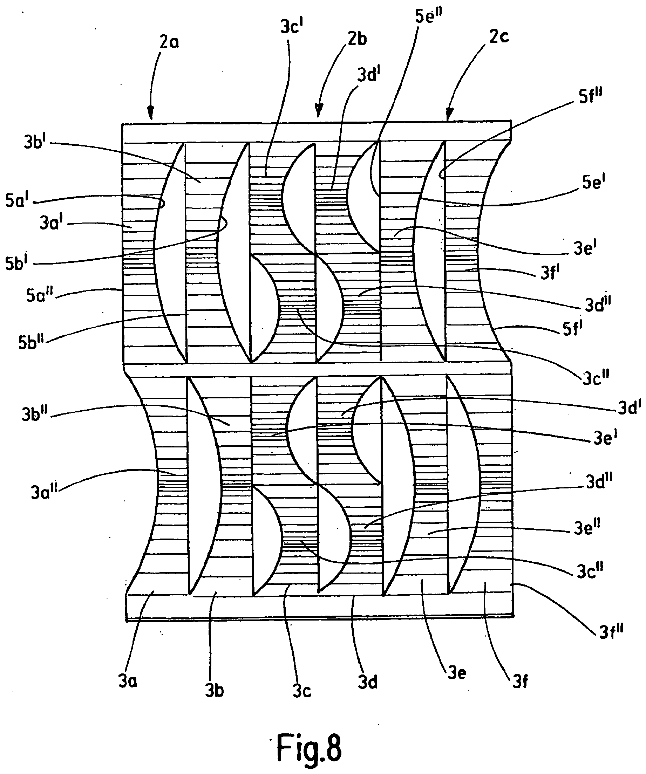

In den Figuren 7 und 8 ist nun ein drittes Ausführungsbeispiel eines Füllkörpers 1 dargestellt, dass seinem prinzipiellen Aufbau demjenigen des ersten Ausführungsbeispiels entspricht. Einander korrespondierenden Bestandteile des Füllkörpers 1 werden daher mit den gleichen Bezugszeichen versehen wie beim ersten Ausführungsbeispiel; ihre Ausgestaltung, Funktion und Wirkung wird nicht mehr erneut beschrieben. Der Füllkörper weist wiederum drei Streifen-Gruppen 2a-2c mit jeweils zwei Streifen 3a, 3b bzw. 3c, 3d bzw. 3e, 3f auf. Der Unterschied zu dem Füllkörper 1 des ersten Ausführungsbeispiels ist nun, dass die ersten Halbwellen 3a'-3f' eines jeden Streifens 3a-3f und die zweiten Halbwellen 3a"-3f" dieser Streifen 3a-3f hinsichtlich ihrer Torsion jeweils gegensinnig orientiert sind: Die ersten Halbwellen 3a', 3b' der Streifen 3a, 3b der ersten Streifengruppe 2a und die ersten Halbwellen 3e', 3f' Streifen 3e, 3f der dritten Streifengruppe 3c des Füllkörpers 1 des dritten Ausführungsbeispiels sind wie die ersten Halbwellen 3a', 3b', 3e', 3f' der Streifen 3a, 3b, 3d, 3e des Füllkörpers 1 des ersten Ausführungsbeispiels ausgebildet, weisen also jeweils in ihrer Laufrichtung gesehen eine positive Torsion im Uhrzeigersinn auf, so dass die jeweils linken Ränder 5a", 5b", 5e", 5f" der ersten Halbwellen 3a', 3b', 3e', 3f' - wie am besten aus Figur 8 ersichtlich - einen geraden Verlauf besitzen, während jeweils die rechten Ränder 5a', 5b', 5e', 5f' dieser Halbwellen der Streifen 3a, 3b, 3e, 3f in der Projektion der Figur 8 einen nach links gekrümmten Verlauf besitzen. Die zweiten Halbwellen 3a", 3b", 3e", 3f" der Streifen 3a, 3b, 3e, 3f sind nun entgegengesetzt orientiert, d. h., sie weisen eine entgegen dem Uhrzeigersinn verlaufende, also negative Torsion auf. Folglich sind wie ebenfalls aus der Figur 8 leicht ersichtlich ist, deren jeweils rechte Rändern 5a', 5b', 5e', 5f' in der Projektion der Figur 8 im Bereich der zweiten Halbwellen 3a", 3b", 3e" und 3f" gerade verlaufend, während die jeweils linken Ränder 5a", 5b", 5e", 5f" in diesem Bereich einen nach rechts gekrümmten Verlauf besitzen. Entsprechendes gilt für die Streifen 3c, 3d der zweiten Streifen-Gruppe 2b, welche eine Periodenlänge I₂ besitzt, die - wie im hier beschriebenen Ausführungsbeispiel - nur die Hälfte der Periodenlänge I₁ der Streifen 3a, 3b, 3e, 3f der Streifen-Gruppen 2a, 2c betragen. Die jeweils ersten Halbwellen 3c', 3d' der beiden Wellen der Streifen 3c, 3d, weist eine im Uhrzeigersinn verlaufende Torsion auf, während die jeweils daran anschließenden Halbwellen 3c", 3d" im Gegenuhrzeigersinn verlaufend tordiert sind. Die Öffnungen O der Figur 8 zeigen, dass hierdurch im Vergleich zu dem bekannten Füllkörper, bei dem die Streifen jeweils gerade verlaufen, eine erhöhte Gasdurchlässigkeit gegeben ist.

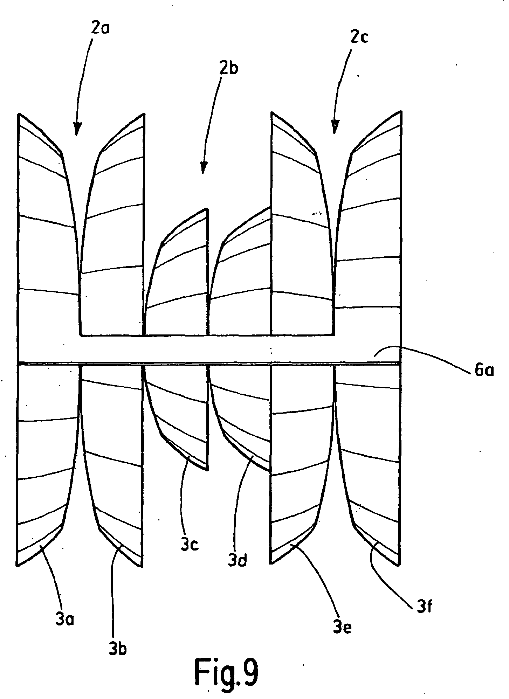

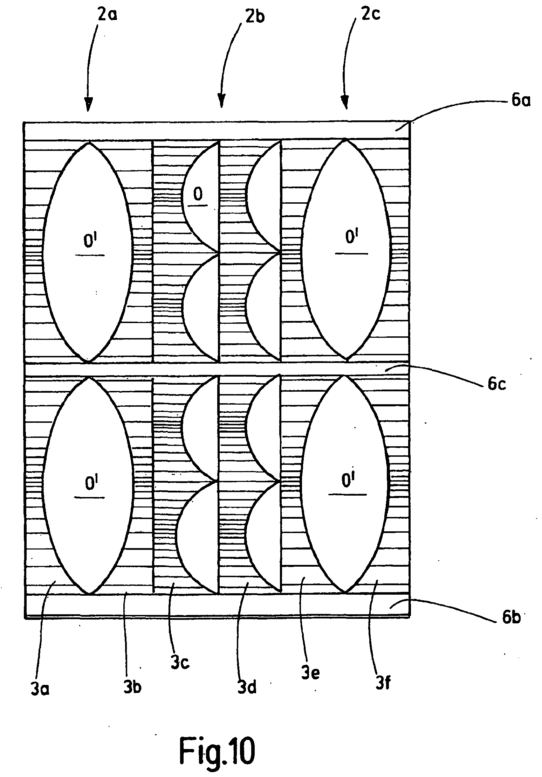

In den Figuren 9 und 10 ist nun ein viertes Ausführungsbeispiel dargestellt, welches seinem Grundaufbau demjenigen des zweiten Ausführungsbeispiels entspricht, so dass einander entsprechende Bauteile mit den gleichen Bezugszeichen versehen und hinsichtlich ihrer Ausgestaltung, Funktion und Wirkung wiederum nicht mehr erneut erläutert werden. Der wesentliche Unterschied zwischen dem zweiten und dem vierten Ausführungsbeispiel ist, dass die Streifen 3a, 3b und 3e, 3f der ersten und der dritten Streifen-Gruppe 2a und 2c gegensinnig tordiert sind. Während beim zweiten Ausführungsbeispiel die vorgenannten Streifen 3a, 3b und 3e, 3f jeweils eine positive Torsion aufweisen, ist beim vierten Ausführungsbeispiel vorgesehen, dass zwar die ersten Streifen 3a bzw. 3e der ersten bzw. der dritten Streifen-Gruppe 2a bzw. 2c positiv tordiert sind, während der jeweils daran anschließende Streifen 3b bzw. 3f negativ tordiert ist. Eine derartige Maßnahme besitzt - wie am besten aus der Figur 10 ersichtlich ist - den Effekt, dass der beschriebene Füllkörper 1 - wie leicht aus Figur 10 ersichtlich - im Bereich der äußeren Streifen-Gruppen 2a, 2c infolge der durch die vorgenannte Ausbildung der entsprechenden Streifen der ersten und der dritten Streifen-Gruppe 2a, 2c besonders große Öffnungen O' zwischen den benachbarten Streifen 3a, 3b und 3e, 3f der Streifen-Gruppen 2a, 2c somit eine besonders offene Struktur in diesen Bereichen besitzt.

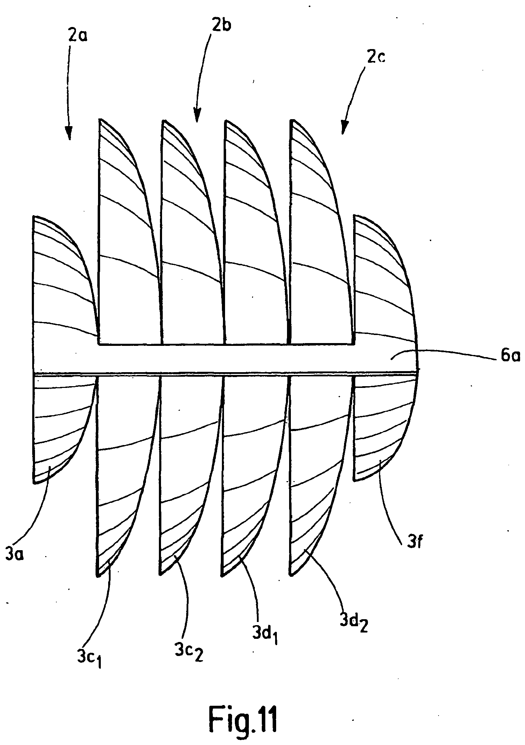

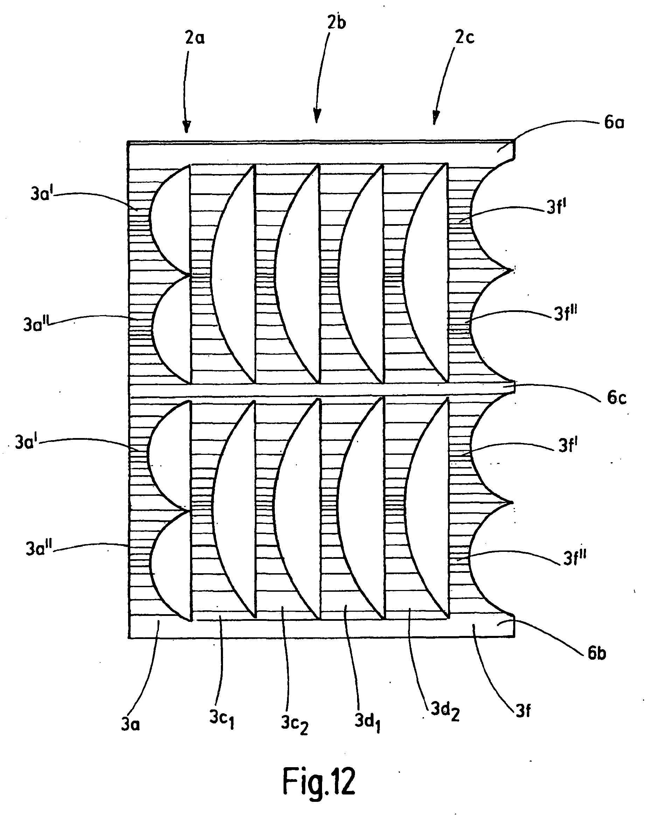

In den Figuren 11 und 12 ist nun ein fünftes Ausführungsbeispiel eines Füllkörpers 1 dargestellt, wobei wiederum einander entsprechende Elemente mit den gleichen Bezugszeichen versehen und hinsichtlich ihrer Ausbildung, Wirkung und Funktion nicht mehr näher beschrieben werden. Der Füllkörper 1 des fünften Ausführungsbeispiels weist drei Streifen-Gruppen 2a-2c auf, wobei aber die erste und die dritte Streifen-Gruppe 2a und 2c jeweils nur einen Streifen 3a bzw. 3f besitzt. Wie am besten die Figur 12 zeigt weisen die beiden äußeren Streifen 3a und 3f des Füllkörpers 1 jeweils zwei Wellen mit jeweils einer ersten und einer zweiten Halbwelle 3a' bzw. 3a" und 3f' bzw. 3f" auf. Die Ausgestaltung der Streifen 3a und 3f des fünften Ausführungsbeispiels entspricht somit derjenigen der Streifen 3c, 3d der zweiten Streifen-Gruppe 2b des ersten Ausführungsbeispiels. Die zweite Streifen-Gruppe 2b besitzt vier Streifen 3c₁, 3c₂, 3d₁, 3d₂, deren Ausgestaltung derjenigen den Streifen 3a, 3b bzw. 3e, 3f der ersten und dritten Streifen-Gruppe 2a und 2c der vorstehenden Ausführungsbeispiele entspricht. Wie am besten aus der Figur 12 ersichtlich, wird durch die Ausgestaltung der "Randstreifen" 3a und 3f des Füllkörpers 1 mit einer geringen Amplitude als derjenigen der "Mittelstreifen" 3c₁-3d₂ der zweiten Streifen-Gruppe ein Füllkörper 1 ausgebildet, der sich aufgrund seiner "eiförmigen" Außenkontur nicht nur durch einen geringen Strömungswiderstand, sondern auch durch eine verbesserte Schüttfähigkeit auszeichnet.

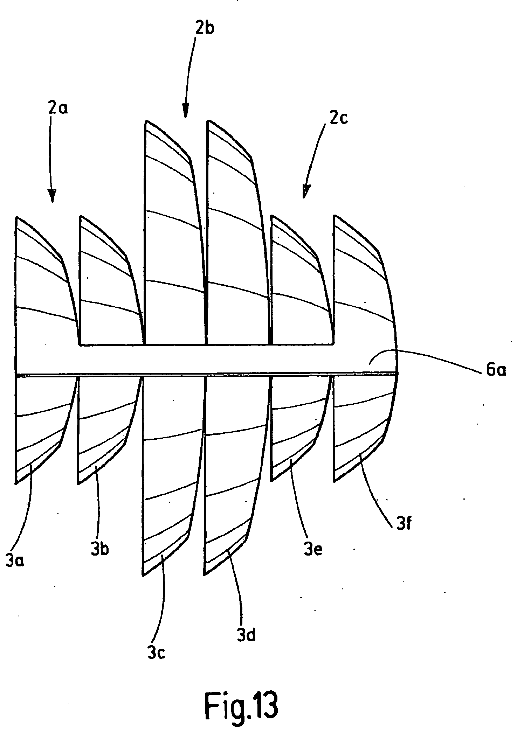

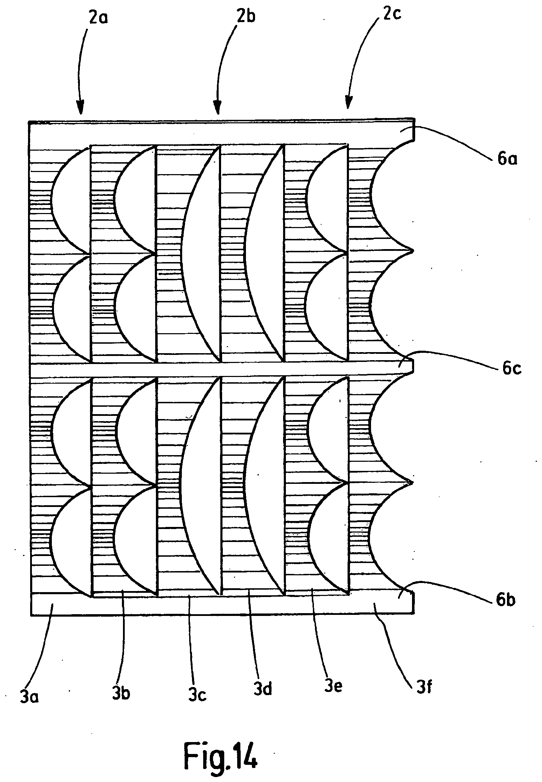

In den Figuren 13 und 14 ist ein sechstes Ausführungsbeispiel eines Füllkörpers 1 dargestellt, wobei wiederum einander entsprechende Elemente mit den gleichen Bezugszeichen versehen und hinsichtlich ihrer Ausgestaltung, Funktion und Wirkung nicht mehr näher erneut beschrieben werden. Der in diesen Figuren dargestellte Füllkörper 1 stellt eine Variation des Füllkörpers des fünften Ausführungsbeispiels dar und weist wiederum drei Streifen-Gruppen 2a-2c mit jeweils zwei Streifen 3a, 3b bzw. 3c, 3d bzw. 3e, 3f auf. Während aber beim fünften Ausführungsbeispiel vorgesehen ist, dass die erste und die dritte Streifen-Gruppe 2a und 2c jeweils nur einen Streifen und die zweite Streifen-Gruppe 2b vier Streifen 3c₁-3d₂ aufweist, ist im sechsten Ausführungsbeispiel des Füllkörpers 1 wiederum der aus den ersten vier Ausführungsbeispielen bekannte Aufbau verwirklicht, nämlich, dass jede der drei Streifen-Gruppen 2a-2c zwei Streifen 3a, 3b bzw. 3c, 3d bzw. 3e, 3f aufweist. Indem nun aber die Streifen 3a, 3b und 3e, 3f der jeweils äußeren Streifen-Gruppen 2a und 2c wieder - wie beim vorangegangenen Ausführungsbeispiel - mit einer geringen Amplitude ausgebildet sind als die Streifen der mittleren Streifen-Gruppe 2b, wird wiederum eine verbesserte Schüttfähigkeit erreicht, da der derart ausgebildete, "ballförmige" Füllkörper 1 eine in der Projektion der Figur 13 gesehen "runde" Außenkontur besitzt.

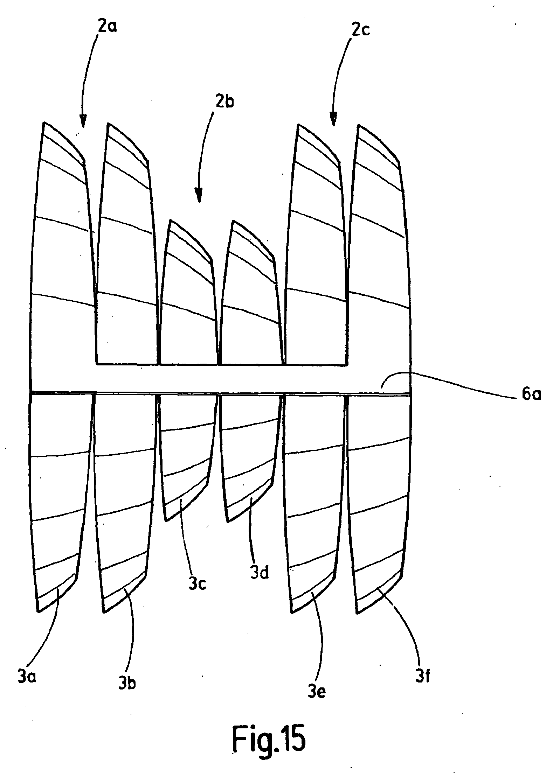

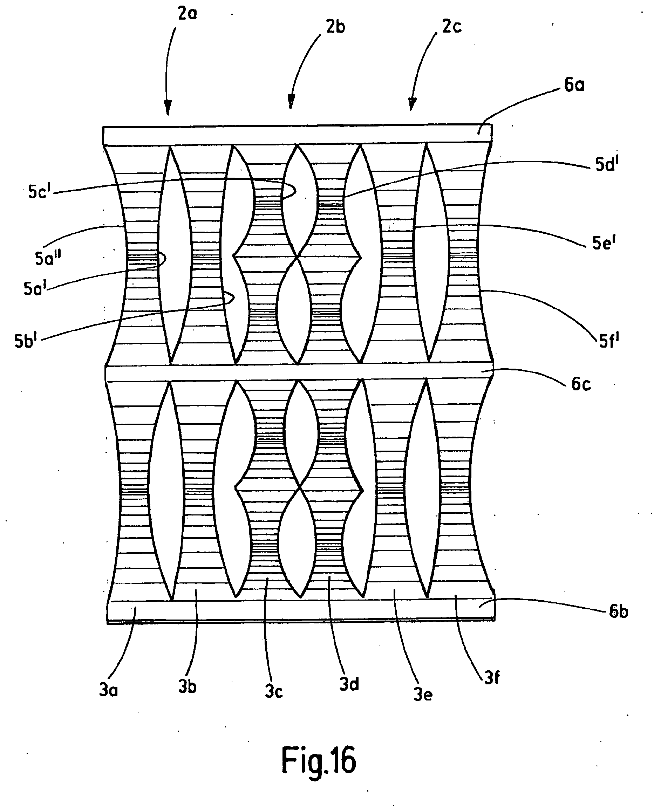

In den Figuren 15 und 16 ist nun eine siebtes Ausführungsbeispiel des Füllkörpers 1 dargestellt, das seinem prinzipiellen Aufbau nach demjenigen des ersten Ausführungsbeispiels entspricht, so dass wiederum korrespondierende Elemente mit den gleichen Bezugszeichen versehen und hinsichtlich ihrer Ausgestaltung, Funktion und Wirkung nicht mehr erneut beschrieben werden. Der wesentliche Unterschied zwischen dem ersten und dem siebten Ausführungsbeispiel ist, dass - wie ein Vergleich der Figuren 3 und 4 sowie 15 und 16 zeigt - die Torsion der Streifen 3a-3f nun nicht mehr um eine Torsionslinie, die jeweils mit dem linken Rand 5a"-5f" der Streifen 3a-3f zusammenfällt, erfolgt, sondern dass vorgesehen ist, dass die Torsion dieser Streifen um eine - gedachte - Torsionslinie erfolgt, die mittig durch die einzelnen Streifen 3a-3f verläuft. Dies ist aus einem Vergleich der Figuren 15 und 16 mit den Figuren 3 und 4 leicht ersichtlich. Der Gegensatz zu dem ersten Ausführungsbeispiel verlaufen die jeweils linken Rändern 5a"-5f" der Streifen 3a-3f des Füllkörpers 1 dieser Ausführungsbeispiele nicht-wie die linken Ränder 5a"-5f" der Streifen 3a-3f des Füllkörpers 1 des ersten Ausführungsbeispiels - geradlinig, sondern weisen - entsprechend den rechten Rändern 5a'-5f' der Streifen 3a-3f des ersten Ausführungsbeispiels - einen gekrümmten Verlauf auf.

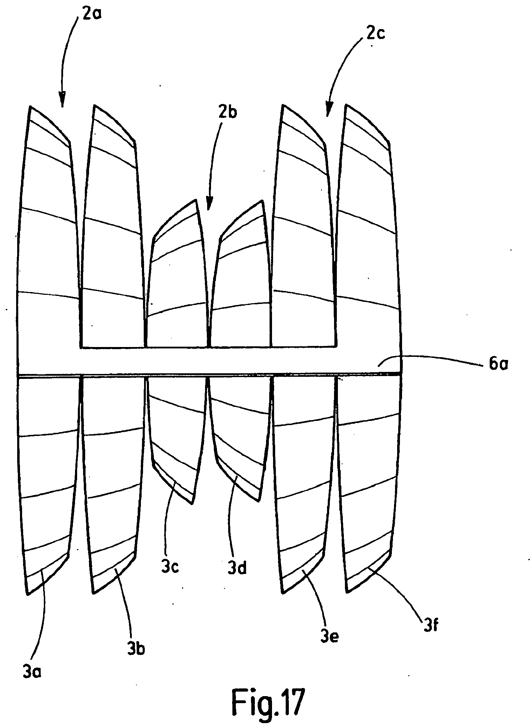

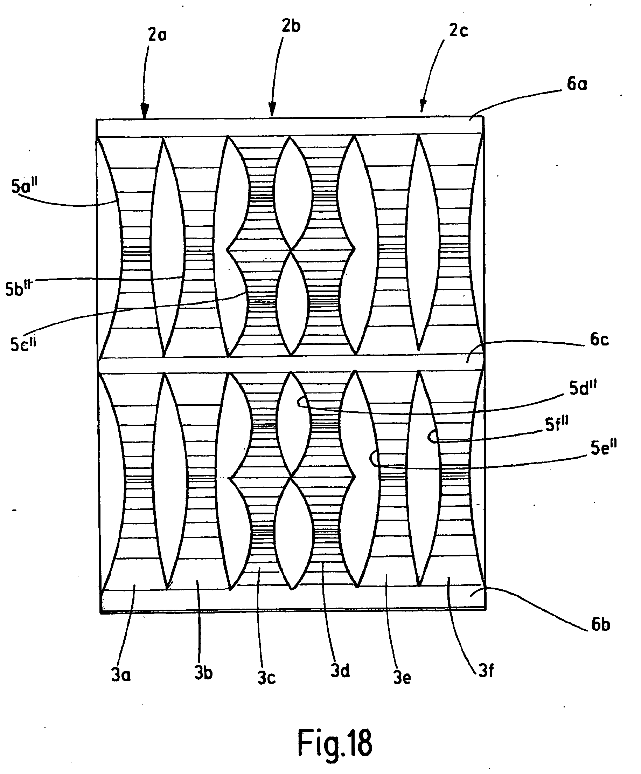

In den Figuren 17 und 18 ist nun ein achtes Ausführungsbeispiel eines Füllkörpers 1 dargestellt, dessen Grundaufbau demjenigen des zweiten Ausführungsbeispiels der Figuren 5 und 6 entspricht. Korrespondierende Elemente werden daher wieder mit den gleichen Bezugszeichen versehen und hinsichtlich ihrer Ausgestaltung, Funktion und Wirkung nicht mehr erneut beschrieben. Der wesentliche Unterschied zwischen dem zweiten und dem siebenten Ausführungsbeispiel ist wiederum dadurch gegeben, dass auch bei diesem - wie beim sechsten Ausführungsbeispiel - die Torsion der Streifen 3a-3f nicht - wie beim zweiten Ausführungsbeispiel - um eine mit dem jeweils linken Rand 5a"-5f" der einzelnen Streifen 3a-3f zusammenfallende Torsionslinie erfolgt, sondern wiederum um eine (gedachte) Torsionslinie, die im Bereich der Mitte eines jeden Streifens 3a-ef liegt.

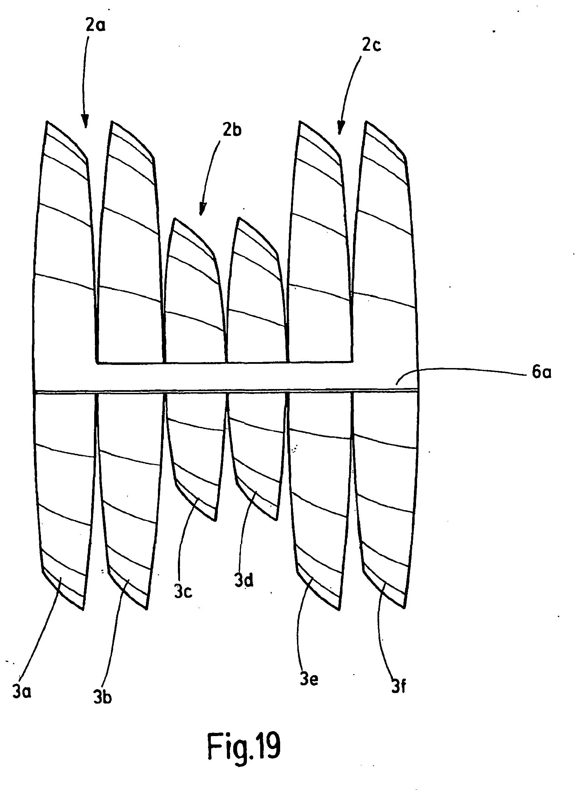

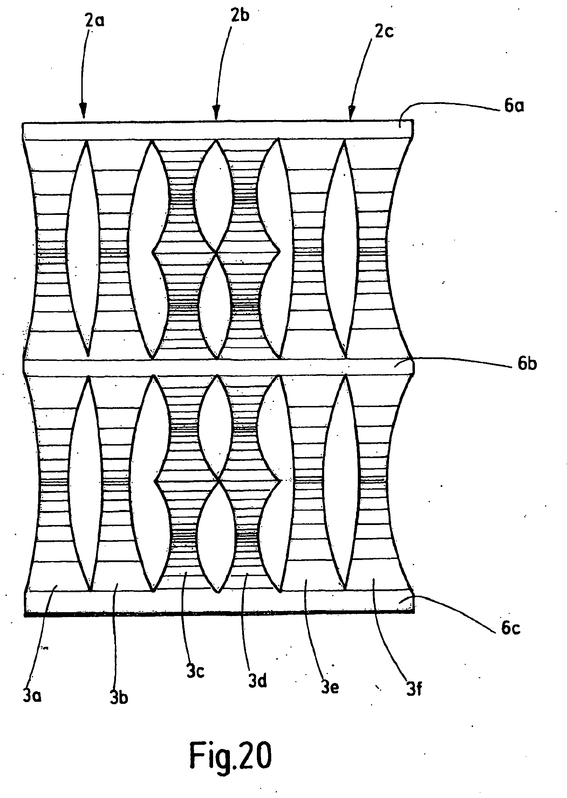

In den Figuren 19 und 20 ist ein neuntes Ausführungsbeispiel eines Füllkörpers dargestellt, der seinem Grundaufbau demjenigen des dritten Ausführungsbeispiels der Figuren 7 und 8 entspricht, so dass auch hier wiederum korrespondierende Elemente mit den gleichen Bezugszeichen versehen und hinsichtlich ihrer Ausgestaltung, Funktion und Wirkung und nicht erneut näher beschrieben werden. Der wesentliche Unterschied zwischen dem neunten Ausführungsbeispiel der Figuren 19 und 20 und dem dritten der Figuren 7 und 8 ist wiederum, dass - wie auch bei den vorgenannten Ausführungsbeispielen - die Torsion der Streifen nicht um eine Torsionslinie, die jeweils mit dem linken Rand 5a"-5f" der Streifen 5a-5f zusammenfällt, erfolgt, sondern jeweils wiederum um eine in etwa in der Mitte eines jeden Streifens 3a-3f liegende Torsionslinie durchgeführt wird.

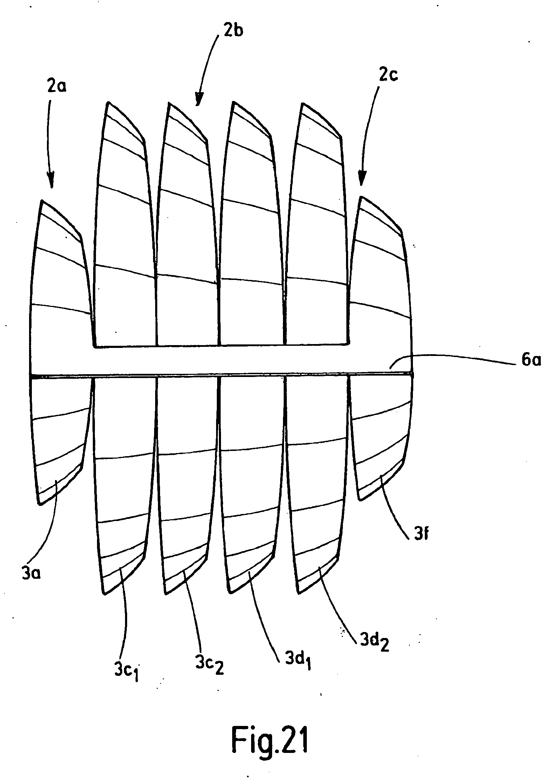

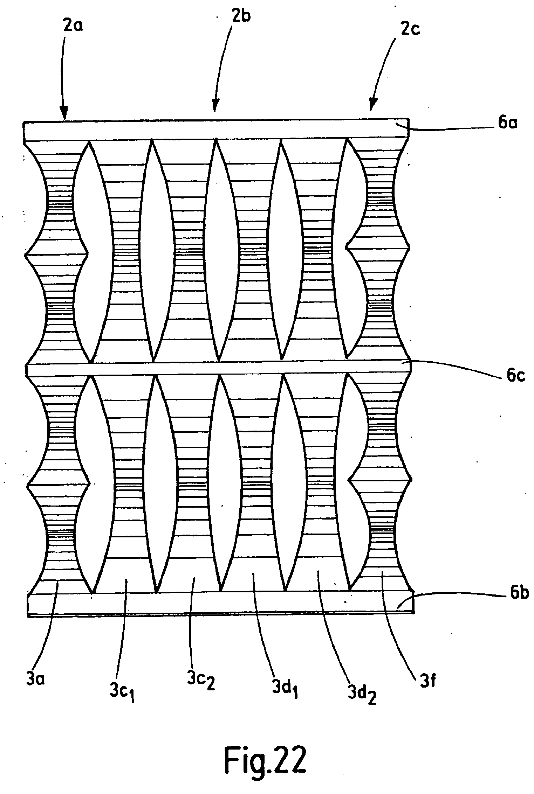

In den Figuren 21 und 22 ist nun ein zehntes Ausführungsbeispiel eines Füllkörpers 1 dargestellt, das seinem Grundaufbau nach dem fünften Ausführungsbeispiel der Figuren 11 und 12 entspricht, so dass auch hier wiederum korrespondierende Elemente mit den gleichen Bezugszeichen versehen und hinsichtlich ihrer Ausgestaltung, Funktion und Wirkung nicht mehr erneut beschrieben werden. Auch hier ist wiederum der Unterschied zwischen den beiden vorgenannten Ausführungsbeispielen, dass die Torsion der Streifen 3a-3f um eine in der Mitte des jeweiligen Streifens liegende Torsionslinie erfolgt.

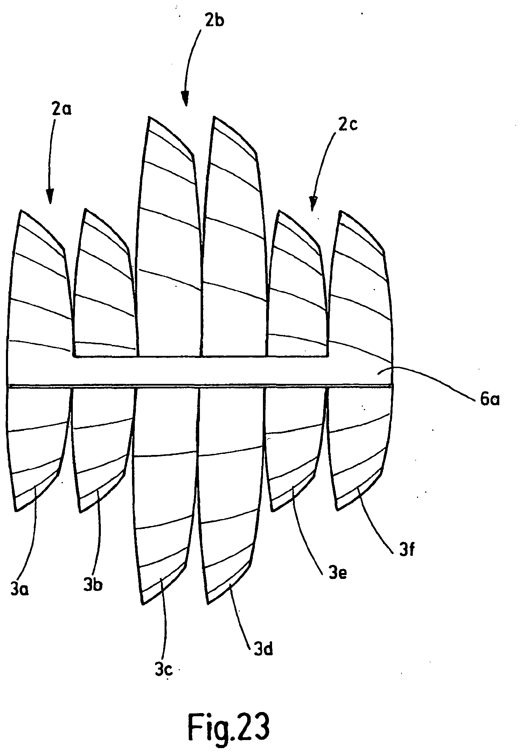

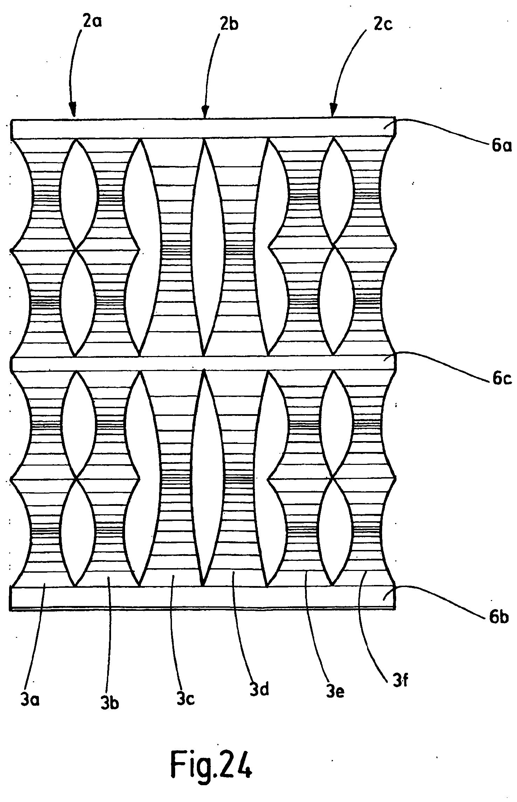

Das gleiche gilt auch für das in den Figuren 23 und 24 dargestellte elfte Ausführungsbeispiel eines Füllkörpers 1, das seinem Grundaufbau nach demjenigen des Ausführungsbeispiels der Figuren 13 und 14 entspricht.

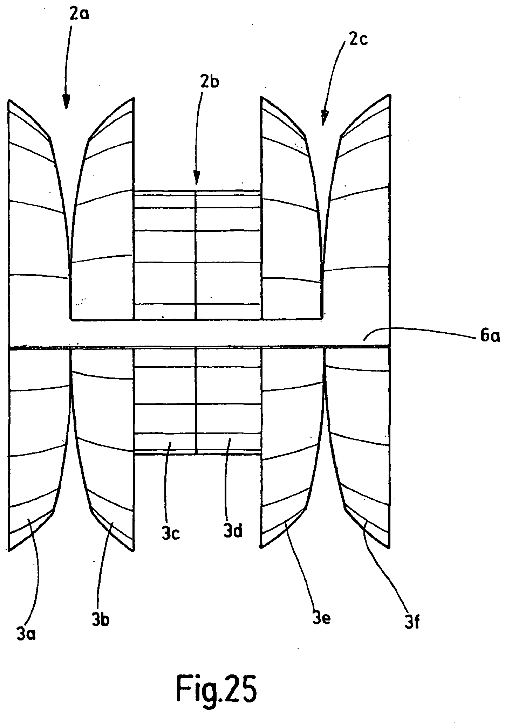

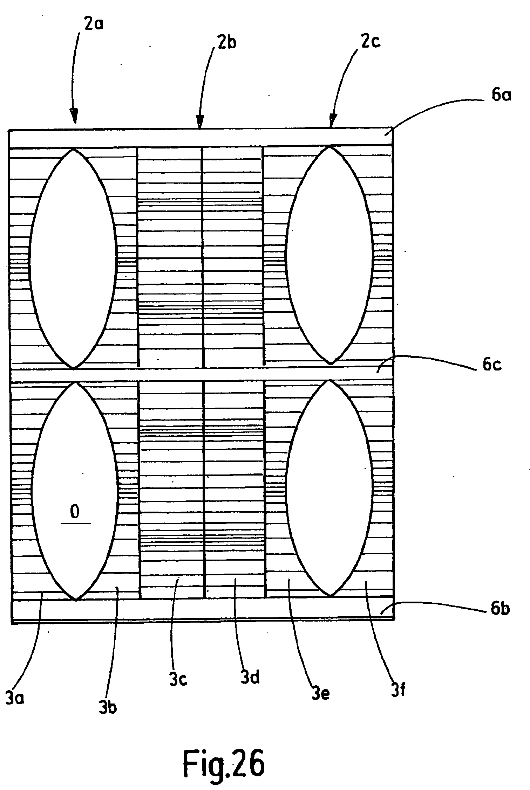

In den Figuren 25 und 26 ist ein zwölftes Ausführungsbeispiel dargestellt, dass seinem Grundaufbau nach demjenigen des vierten Ausführungsbeispiels der Figuren 9 und 10 entspricht, so dass auch hier - wie bei den vorangehenden Ausführungsbeispielen - einander entsprechende Bauteile mit den gleichen Bezugszeichen versehen werden und diese hinsichtlich ihrer Ausgestaltung, Funktion und Wirkung nicht mehr erneut beschrieben werden. Der wesentliche Unterschied zwischen den beiden vorgenannten Ausführungsbeispielen ist nun, dass beim zehnten Ausführungsbeispiel die Streifen 3c, 3d der zweiten Streifen-Gruppe 2b nicht mehr tordiert, sondern wie beim bekannten Füllkörper plan ausgeführt sind. Eine derartige Maßnahme besitzt den Vorteil, dass hierdurch eine vereinfachte Herstellung des Füllkörpers 1 ermöglicht wird. Natürlich ist es auch möglich, dass auch bei den Füllkörpern 1 der anderen Ausführungsbeispiele ein oder mehrere Streifen einer oder mehrerer Streifen-Gruppen 2a-2c plan ausgeführt sind. Dem Fachmann sind die Modifikationen, die er vorzunehmen hat, ersichtlich, sie müssen daher nicht mehr erneut beschrieben werden.

Insbesondere ist es des weiteren nicht zwingend, dass - wie beim Ausführungsbeispiel der Figuren 25 und 26 - die Streifen 3a, 3b und 3e, 3f der beiden äußeren Streifen-Gruppen 2a und 2c gegensinnig orientiert sind. Auch eine gleichsinnige Orientierung dieser Streifen, wie z. B. beim zweiten Ausführungsbeispiel der Figuren 2 und 4 ist möglich.

Die Verwindungssteifigkeit der beschriebenen Füllkörper 1 der vorstehend erlauterten zwölf Ausführungsbeispiele kann noch dadurch erhöht werden, dass einer oder mehrere Streifen 3a-3f ein Versteifungselement, insbesondere eine entsprechend ausgebildete Sicke, aufweisen. Dieses Versteifungselement verläuft dann vorzugsweise in Längsrichtung der entsprechenden Streifen 3a-3f. Auch kann vorgesehen sein, dass alternativ oder ergänzend zu den vorgenannten Versteifungselementen der Streifen 3a-3f mindestens einer der Endbereiche 6a und 6b und ggfs. auch der Mittelbereich 6c ein entsprechendes Versteifungselement, insbesondere wiederum eine Versteifungssicke, aufweist. Diese verlaufen dann vorzugsweise in Längsrichtung der entsprechenden Endstege 6a, 6b und des Mittelbereichs 6c, also vorzugsweise im wesentlichen orthogonal zu den Versteifungselementen der Streifen 3a-3f.

Durch die beschriebenen Maßnahmen werden Füllkörper 1 ausgebildet, bei denen die beschriebene Torsion der Streifen 3a-3f der einzelnen Streifen-Gruppen 2a-2c bewirkt, dass dadurch eine Öffnung der Geometrie des Füllkörpers in allen sichtbaren Ausrichtungen erfolgt. Dies unterscheidet die beschriebenen Füllkörper von denen aus der EP 0 764 762 B1 bekannten und führt zu einer erhöhten Gasdurchlässigkeit und somit einem verringerten Strömungswiderstand derselben. Außerdem bewirkt die Torsion der Streifen 3a-3f eine erhöhte Stabilität und somit eine vergrößerte Verwindungssteifigkeit der Geometrie der Füllkörper 1.

## Patentansprüche

1. Füllkörper, insbesondere für Stoff- und/oder Wärmeaustauschkolonnen oder - türme, die von einer Gas- und/oder Flüssigkeitsströmung versetzt werden, wobei der von einer ersten und einer zweiten Außenseite begrenzte Füllkörper (1) eine Mehrzahl von Austauschflächen (4a-4f) aufweist und diese im wesentlichen durch die Oberflächen von Halbwellen (3a', 3a",-3f',3f") aufweisenden wellenförmigen Streifen (3a-3f) ausgebildet sind, wobei der Füllkörper mindestens eine erste Streifen-Gruppe (2a), die mindestens einen wellförmigen Streifen mit einer ersten Periodenlänge I₁ enthält, und mindestens eine sich daran anschließende zweite Streifen-Gruppe (2b), die mindestens einen wellenförmigen Streifen (3c, 3d) mit einer zweiten Periodenlänge I₂ enthält, aufweist, wobei sich diese wellenförmigen Streifen (3a-3f) entlang einer gedachten Axialebene des Füllkörpers erstrecken und mindestens ein Streifen (3a-3f) zwischen einem ersten Endsteg (6a) und einem zweiten Endsteg (6b) verläuft und die beiden Endstege (6a, 6b) in der Querrichtung des Füllkörpers (1) verlaufen, wobei die Periodenlänge I₁ eines an die zweiten Streifen-Gruppe (2b) angrenzenden Streifens (3b) der ersten Streifen-Gruppe (2a) und die Periodenlänge I₂ eines an diesen angrenzenden Streifens (3c) der zweiten Streifen-Gruppe derart aufeinander abgestimmt sind, dass die beiden aneinander angrenzenden Streifen (3b, 3c) an mindestens einer Stelle derart in Wirkkontakt stehen, dass ein Flüssigkeitsübergang zwischen diesen beiden Streifen (3b, 3c) erfolgbar ist, **dadurch gekennzeichnet, dass** mindestens ein Streifen (3a-3d) des Füllkörpers (1) um eine in Längsrichtung des Füllkörpers (1) verlaufende Torsionslinie tordiert ist, wobei die Torsion dieses Streifens (3a-3d) um diese Torsionslinie vom ersten Endsteg (6a) ausgehend zunimmt, im Bereich eines ersten Amplitudenmaximums des Streifens (3a-3d) maximal ist, Im Bereich zwischen diesem Amplitudenmaximum und dem mittleren Bereich (6c) des Füllkörpers (1) wieder abnimmt, von diesem mittleren Bereich (6c) ausgehend bis zu einem zweiten Amplitudenmaximum dieses Streifens zunimmt und im Bereich zwischen diesen Amplitudenmaximum und dem zweiten Endsteg (6b) wieder abnimmt, und dass sämtliche Streifen (3a-3f) in diesem mittleren Bereich (6c) derart miteinander in Kontakt stehen, dass eine für die Flüssigkeit durchgehende Verbindung von der ersten Außenseite zu der zweiten Außenseite des Füllkörpers (1) erfolgbar ist.

2. Füllkörper nach Anspruch 1, **dadurch gekennzeichnet, dass** der Füllkörper (1) mindestens eine dritte Streifen-Gruppe (2c), die mindestens einen halbwellen- und/oder wellenförmigen Streifen (3e, 3f) mit einer dritten Periodenlänge I₃ enthält, aufweist, dass die Periodenlänge I₃ des an die zweite Streifen-Gruppe (2b) angrenzenden Streifens (3e) der dritten Streifen-Gruppe (2c) und die Periodenlänge I₂ des an diese (2c) angrenzenden Streifens (3d) der zweiten Streifen-Gruppe (2b) derart aufeinander abgestimmt sind, dass die beiden aneinander angrenzenden Streifen (3d, 3e) an mindestens einer Stelle derart in Wirkkontakt stehen, dass ein Flüssigkeitsübergang zwischen diesen beiden Streifen (3d, 3e) erfolgbar ist.

3. Füllkörper nach Anspruch 2 **dadurch gekennzeichnet, dass** die Periodenlänge I₁ mindestens eines Streifens (3a, 3b) der ersten Streifen-Gruppe (2a) im wesentlichen gleich der Periodenlänge I₃ eines Streifens (3e, 3f) der dritten Streifen-Gruppe (2c) ist.

4. Füllkörper nach Anspruch 2 **dadurch gekennzeichnet, dass** die Periodenlänge I₂ bzw. I₁ oder I₃ einer Streifen-Gruppe (2b bzw. 2a, 2d) kleiner als die Periodenlänge I₁ oder I₃ bzw. I₂ einer der anderen Streifen-Gruppe (2a, 2c bzw. 2b) ist, und dass vorzugsweise die Periodenlänge I₂ der zweiten Streifen-Gruppe (2b) kleiner als die Periodenlänge I₁ oder I₃ der ersten (2a) und/oder dritten Streifen-Gruppe (2c) ist.

5. Füllkörper nach einem der vorangehenden Ansprüche, **dadurch gekennzeichnet, dass** die Torsion der oder mindestens eines der Streifen (3a-3f) des Füllkörpers (1) um eine im wesentlichen mit einem Rand (5a'-5f' bzw. 5a"-5f") des Streifens (3a-3f) zusammenfallende Torsionslinie erfolgt.

6. Füllkörper nach einem der vorangehenden Ansprüche, **dadurch gekennzeichnet, dass** die Torsion der oder mindestens eines der Streifen (3a-3f) des Füllkörpers (1) um eine im wesentlichen mit einer Mittellinie des jeweiligen Streifens (3a-3f) zusammenfallende Torsionslinie erfolgt.

7. Füllkörper nach einem der vorangehenden Ansprüche, **dadurch gekennzeichnet, dass** mindestens der letzte Streifen (3b) einer Streifen-Gruppe (2a) und der daran anschließende erste Streifen (3c) der darauf folgenden Streifen-Gruppe (2b) alternierend tordiert ausgebildet sind.

8. Füllkörper nach einem der vorangehenden Ansprüche, **dadurch gekennzeichnet, dass** zwei benachbarte Streifen (3a, 3b; 3c, 3d; 3e, 3f) einer Streifen-Gruppe (2a; 2b; 2c) alternierend tordiert ausgebildet sind.

9. Füllkörper nach einem der vorangehenden Ansprüche, **dadurch gekennzeichnet, dass** die erste Halbwelle (3a', 3a"; 3b', 3b") mindestens eines Streifens (3a bzw. 3b) und die zweite Halbwelle (3a", 3b") dieses Streifens entgegengesetzt orientiert tordiert sind.

10. Füllkörper nach einem der vorangehenden Ansprüche, **dadurch gekennzeichnet, dass** in mindestens einer Streifen-Gruppe (2a-2c) mindestens zwei Streifen (3a, 3b; 3c, 3d; 3e, 3f) alternierend orientiert tordiert sind.

11. Füllkörper nach einem der vorangehenden Ansprüche, **dadurch gekennzeichnet, dass** der letzte Streifen (3b; 3d) einer Streifen-Gruppe (2a; 2b) und der daran anschließende Streifen (3c; 3e) der auf die vorgenannte Streifen-Gruppe (2a; 2b) folgenden Streifen-Gruppe (2b; 2c) alternierend orientiert tordiert sind.

12. Füllkörper nach einem der vorangehenden Ansprüche, **dadurch gekennzeichnet, dass** in mindestens einer Streifen-Gruppe (2a, 2b, 2c) mindestens zwei Streifen (3a, 3b; 3c, 3d: 3e, 3f) gleichsinnig tordiert sind.

13. Füllkörper nach einem der vorangehenden Ansprüche, **dadurch gekennzeichnet, dass** die Amplitude mindestens eines Streifens (3a, 3b) mindestens einer Streifen-Gruppen (2a) geringer als die Amplitude des oder der Streifen (3c₁-3c₂, 3d₁-3d₂) der an diese Streifen-Gruppe (2a) anschließenden weiteren Streifen-Gruppe (2b) ist.

14. Füllkörper nach einem der vorangehenden Ansprüche, **dadurch gekennzeichnet, dass** die Anzahl der Streifen (2a, 2b) einer Streifen-Gruppe (2a) geringer als die Anzahl der Streifen (3c, 3d) der daran anschließenden Streifen-Gruppe (2b) ist.

15. Füllkörper nach einem der vorangehenden Ansprüche, **dadurch gekennzeichnet, dass** auf eine Streifen-Gruppe (2a), in der mindestens ein Streifen (3a, 3b) tordiert ist, eine Streifengruppe (2b) folgt, die mindestens einen planen Streifen (3c, 3d) aufweist.

## Claims

1. Packing element, in particular for use in mass transfer and/or heat transfer columns or towers, through which a gas and/or liquid flows, wherein the packing element (1) confined by a first and a second outside comprises a plurality of exchange surfaces (4a-4f) which are essentially formed by the surfaces of wave-shaped strips (3a-3f) having half-waves (3a', 3a"-3f', 3f"), wherein the packing element comprises at least one first group of strips (2a), comprising at least one half-wave-shaped and/or wave-shaped strip with a first periodic length I₁, and at least one adjoining second group of strips (2b), comprising at least one wave-shaped strip (3c,3d) with a second periodic length I₂, wherein the wave-shaped strips (3a-3f) extend along an imaginary axial plane of the packing element (1) and at least one strip (3a-3f) extends between a first end bridge (6a) and a second end bridge (6b), the two end bridges (6a, 6b) extending in a transverse direction of the packing element (1), wherein the periodic length I₁ of a strip (3b) of the first group of strips (2a) adjoining the second group of strips (2b), and the periodic length I₂ of a strip (3c) adjoining said strip of the first group of strips, are matched to each other in such a way, that the two adjoining strips (3b, 3c) are in operative contact with each other at at least one point, enabling a liquid transfer between these two strips (3b, 3c), wherein at least one strip (3a, 3f) extends from a first end bridge (6a) to a second end bridge (6b), and wherein the two end bridges (6a, 6b) run along the transverse direction of the packing element,
**characterized in that**
at least one strip (3a-3d) of the packing element (1) is torsioned about a torsion line running in the longitudinal direction of the packing element (1), wherein the torsion of the strip (3a-3d) along said torsion line increases starting from the first end bridge (6a), is at maximum in the area of a first amplitude maximum of the strip (3a-3d), decreases in the area between said amplitude maximum and the central section (6c) of the packing element (1), increases, starting from said central section (6c), up to a second amplitude maximum of said strip (3a-3d) and decreases in the area between said amplitude maximum and the second end bridge (6b), and that all strips (3a-3f) are in contact with each other in this central section (6c) in such a way that a persistent connection for the liquid is formed from the first outside to the second outside of the packing element (1).

2. Packing element according to claim 1, **characterized in that** the packing element (1) comprises at least a third group of strips (2c), comprising at least one half-wave-shaped and/or wave-shaped strip (3e, 3f) with a third periodic length I₃, that the periodic length I₃ of the strip (3e) of the third group of strips (2c) adjoining the second group of strips (2b), and the periodic length I₂ of the strip (3d) in the second group of strips (2b) adjoining said third group of strips (2c), are matched to each other in such a way, that the two adjoining strips (3d, 3e) are in contact with each other at at least one point, enabling a liquid transfer between these two strips (3d,3e).

3. Packing element according to claim 2, **characterized in that** the periodic length I₁ of at least one strip (3a, 3b) of the first group of strips (2a) is essentially equal to the periodic length I₃ of a strip (3e, 3f) of the third group of strips (2c).

4. Packing element according to claim 2, **characterized in that** the periodic length I₂ or I₁ or I₃ of a group of strips (2b or 2a, 2d) is less than the periodic length I₁ or I₃ or I₂ of one of the other group of strips (2a, 2c or 2b), and that preferably the periodic length I₂ of the second group of strips (2b) is less than the periodic length I₁ or I₃ of the first (2a) and/or third group of strips (2c).

5. Packing element according to one of the previous claims, **characterized in that** the torsion of the strips or at least one of the strips (3a-3f) of the packing element (1) occurs about a torsion line essentially coinciding with an edge (5a'-5f' or 5a"-5f") of the strip (3a-3f).

6. Packing element according to one of the previous claims, **characterized in that** the torsion of the strips or at least one of the strips (3a-3f) of the packing element (1) occurs about a torsion line essentially coinciding with a central line of the respective strip (3a-3f).

7. Packing element according to one of the previous claims, **characterized in that** at least the last strip (3b) of a group of strips (2a) and the adjoining first strip (3c) of the following group of strips (2b) are formed alternatingly torsioned.

8. Packing element according to one of the previous claims, **characterized in that** two adjoining strips (3a, 3b; 3c, 3d; 3e, 3f) of a group of strips (2a; 2b; 2c) are formed alternatingly torsioned.

9. Packing element according to one of the previous claims, **characterized in that** the first half wave (3a', 3a"; 3b', 3b") of at least one strip (3a or 3b) and the second half wave (3a", 3b") of this strip are oppositely orientated torsioned.

10. Packing element according to one of the previous claims, **characterized in that** in at least one group of strips (2a-2c) at least two strips (3a, 3b; 3c, 3d; 3e, 3f) are alternatingly orientated torsioned.

11. Packing element according to one of the previous claims, **characterized in that** the last strip (3b; 3d) of a group of strips (2a, 2b) and the adjoining strip (3c; 3e) of the group of strips (2b; 2c) following the before mentioned group of strips (2a, 2b) is alternatingly orientated torsioned.

12. Packing element according to one of the previous claims, **characterized in that** in at least one of the group of strips (2a, 2b, 2c) at least two strips (3a, 3b; 3c, 3d; 3e, 3f) are torsioned in the same direction.

13. Packing element according to one of the previous claims, **characterized in that** the amplitude of at least one strip (3a, 3b) of at least one of the group of strips (2a) is less than the amplitude of the one or the strips (3c1-3c2, 3d1-3d2) of a further group of strips (2b) adjoining this group of strips (2a).

14. Packing element according to one of the previous claims, **characterized in that** the number of strips (2a, 2b) of a group of strips (2a) is less than the number of strips (3c, 3d) of the adjoining group of strips (2b).

15. Packing element according to one of the previous claims, **characterized in that** a group of strips (2a) having at least one torsioned strip (3a, 3b) is followed by a group of strips (2b) comprising at least one planar strip (3c, 3d).

## Revendications

1. Garnissage, en particulier pour des colonnes ou des tours d'échange de matière et/ou de chaleur, qui sont traversées par un flux de gaz et/ou de liquide, dans lequel le garnissage (1) délimité par un premier et un deuxième côté extérieur présente une multitude de surfaces d'échange (4a-4f) et ces dernières sont réalisées sensiblement par les surfaces de bandes (3a-3f) en forme d'ondes présentant des demi-ondes (3a', 3a", 3f', 3f"), dans lequel le garnissage présente au moins un premier groupe de bandes (2a), qui contient au moins une bande en forme d'onde avec une première longueur de période I₁, et au moins un deuxième groupe de bandes (2b), se raccordant au premier groupe de bandes, qui contient au moins une bande (3c, 3d) en forme d'onde avec une deuxième longueur de période l₂, dans lequel lesdites bandes (3a-3f) en forme d'ondes s'étendent le long d'un plan axial imaginaire du garnissage et au moins une bande (3a-3f) s'étend entre une première entretoise d'extrémité (6a) et une deuxième entretoise d'extrémité (6b) et les deux entretoises d'extrémité (6a, 6b) s'étendent dans la direction transversale du garnissage (1), dans lequel la longueur de période l₁ d'une bande (3b), jouxtant le deuxième groupe de bandes (2b), du premier groupe de bandes (2a) et la longueur de période l₂ d'une bande (3c), jouxtant cette dernière, du deuxième groupe de bandes sont adaptées l'une en fonction de l'autre de telle manière que les deux bandes (3b, 3c) se jouxtant l'une l'autre sont en contact fonctionnel au niveau au moins d'un emplacement de telle manière qu'un transfert de liquide entre lesdites deux bandes (3b, 3c) peut avoir lieu, **caractérisé en ce qu'**au moins une bande (3a-3d) du garnissage (1) est torsadée autour d'une ligne de torsion s'étendant dans la direction longitudinale du garnissage (1), dans lequel la torsion de ladite bande (3a-3d) autour de ladite ligne de torsion augmente en partant de la première entretoise d'extrémité (6a), est maximale dans la zone d'un premier maximum d'amplitude de la bande (3a-3d), diminue à nouveau dans la zone entre ledit maximum d'amplitude et la zone centrale (6c) du garnissage (1), augmente en partant de ladite zone centrale (6c) jusqu'à un deuxième maximum d'amplitude de ladite bande et diminue à nouveau dans la zone entre ledit maximum d'amplitude et la deuxième entretoise d'extrémité (6b), et **en ce que** toutes les bandes (3a-3f) dans ladite zone centrale (6c) sont en contact les unes avec les autres de telle manière qu'une liaison traversante pour le liquide allant du premier côté extérieur en direction du deuxième côté extérieur du garnissage (1) peut avoir lieu.

2. Garnissage selon la revendication 1, **caractérisé en ce que** le garnissage (1) présente au moins un troisième groupe de bandes (2c), qui contient au moins une bande (3e, 3f) en forme de demi-onde et/ou en forme d'onde avec une troisième longueur de période l₃, **en ce que** la longueur de période l₃ de la bande (3e), jouxtant le deuxième groupe de bandes (2b), du troisième groupe de bandes (2c) et la longueur de période l₂ de la bande (3d), jouxtant ce dernier (2c), du deuxième groupe de bandes (2b) sont adaptées l'une en fonction de l'autre de telle manière que les deux bandes (3d, 3e) se jouxtant l'une l'autre sont en contact fonctionnel au niveau au moins d'un emplacement de telle manière qu'un transfert de liquide entre lesdites deux bandes (3d, 3e) peut avoir lieu.

3. Garnissage selon la revendication 2, **caractérisé en ce que** la longueur de période l₁ au moins d'une bande (3a, 3b) du premier groupe de bandes (2a) est sensiblement égale à la longueur de période l₃ d'une bande (3e, 3f) du troisième groupe de bandes (2c).

4. Garnissage selon la revendication 2, **caractérisé en ce que** la longueur de période l₂ ou l₁ ou l₃ d'un groupe de bandes (2b ou 2a, 2d) est inférieure à la longueur de période l₁ ou l₃ ou l₂ d'un des autres groupes de bandes (2a, 2c ou 2b), et **en ce que** de préférence la longueur de période I₂ du deuxième groupe de bandes (2b) est inférieure à la longueur de période l₁ ou l₃ du premier (2a) et/ou du troisième groupe de bandes (2c).

5. Garnissage selon l'une quelconque des revendications précédentes, **caractérisé en ce que** la torsion de la bande ou au moins d'une des bandes (3a-3f) du garnissage (1) a lieu autour d'une ligne de torsion coïncidant sensiblement avec un bord (5a' -5f' ou 5a"-5f") de la bande (3a-3f).

6. Garnissage selon l'une quelconque des revendications précédentes, **caractérisé en ce que** la torsion de la bande ou au moins d'une des bandes (3a-3f) du garnissage (1) a lieu autour d'une ligne de torsion coïncidant sensiblement avec une ligne centrale de la bande (3a-3f) respective.

7. Garnissage selon l'une quelconque des revendications précédentes, **caractérisé en ce qu'**au moins la dernière bande (3b) d'un groupe de bandes (2a) et la première bande (3c) s'y raccordant du groupe de bandes (2b) qui suit sont réalisées en étant tordues alternativement.

8. Garnissage selon l'une quelconque des revendications précédentes, **caractérisé en ce que** deux bandes (3a, 3b ; 3c, 3d ; 3e, 3f) adjacentes d'un groupe de bandes (2a ; 2b ; 2c) sont réalisées en étant tordues alternativement.

9. Garnissage selon l'une quelconque des revendications précédentes, **caractérisé en ce que** la première demi-onde (3a', 3a" ; 3b', 3b") au moins d'une bande (3a ou 3b) ou la deuxième demi-onde (3a", 3b") de ladite bande sont tordues selon une orientation opposée.

10. Garnissage selon l'une quelconque des revendications précédentes, **caractérisé en ce qu'**au moins deux bandes (3a, 3b : 3c, 3d ; 3e, 3f) sont tordues selon une orientation alternée dans au moins un groupe de bandes (2a-2c).

11. Garnissage selon l'une quelconque des revendications précédentes, **caractérisé en ce que** la dernière bande (3b ; 3d) d'un groupe de bandes (2a ; 2b) et la bande (3c ; 3e) s'y raccordant du groupe de bandes (2b ; 2c) suivant le groupe de bandes (2a, 2b) susmentionné sont tordues selon une orientation alternée.

12. Garnissage selon l'une quelconque des revendications précédentes, **caractérisé en ce qu'**au moins deux bandes (3a, 3b ; 3c, 3d ; 3e, 3f) sont tordues dans le même sens dans au moins un groupe de bandes (2a, 2b, 2c).

13. Garnissage selon l'une quelconque des revendications précédentes, **caractérisé en ce que** l'amplitude au moins d'une bande (3a, 3b) au moins d'un groupe de bandes (2a) est inférieure à l'amplitude de la ou des bandes (3c₁-3c₂, 3d₁-3d₂) de l'autre groupe de bandes (2b) se raccordant audit groupe de bandes (2a).

14. Garnissage selon l'une quelconque des revendications précédentes, **caractérisé en ce que** le nombre des bandes (2a, 2b) d'un groupe de bandes (2a) est inférieur au nombre des bandes (3c, 3d) du groupe de bandes (2b) s'y raccordant.

15. Garnissage selon l'une quelconque des revendications précédentes, **caractérisé en ce qu'**un groupe de bandes (2b), qui présente au moins une bande (3c, 3d) plane, suit un groupe de bandes (2a), dans lequel au moins une bande (3a, 3b) est tordue.
